(19) Europäisches Patentamt
European Patent Office
Office européen des brevets

(11) **EP 4 682 107 A1**

(12) **EUROPEAN PATENT APPLICATION**
published in accordance with Art. 153(4) EPC

(43) Date of publication:
**21.01.2026 Bulletin 2026/04**

(21) Application number: **24774780.1**

(22) Date of filing: **12.03.2024**

(51) International Patent Classification (IPC):
*C01G 41/00* (2006.01)    *C08K 3/01* (2018.01)
*C08L 101/00* (2006.01)    *C09K 3/00* (2006.01)

(52) Cooperative Patent Classification (CPC):
**C01G 41/00; C08K 3/01; C08L 101/00; C09K 3/00**

(86) International application number:
**PCT/JP2024/009664**

(87) International publication number:
**WO 2024/195641 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.03.2023   JP 2023043590**
**29.09.2023   JP 2023170832**

(71) Applicant: **SUMITOMO METAL MINING CO., LTD.**
**Tokyo**
**105-8716 (JP)**

(72) Inventors:
• **NAKAKURA, Shuhei**
  **Ichikawa-shi, Chiba 272-8588 (JP)**
• **MACHIDA, Keisuke**
  **Ichikawa-shi, Chiba 272-8588 (JP)**

(74) Representative: **Jones, Nicholas Andrew**
**Withers & Rogers LLP**
**2 London Bridge**
**London SE1 9RA (GB)**

(54) **COMPLEX TUNGSTEN OXIDE PARTICLES, NEAR-INFRARED RAY ABSORBING PARTICLE DISPERSION LIQUID, AND NEAR-INFRARED RAY ABSORBING PARTICLE DISPERSION**

(57)    Complex tungsten oxide particles include complex tungsten oxide represented by a general formula: $M_xW_yO_z$ (where, the M element is at least one element selected from the group consisting of alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; $0.20 \leq x/y \leq 0.37$; and $2.2 \leq z/y \leq 3.3$). A crystal system of the complex tungsten oxide is hexagonal. An STEM-HAADF image observation of the complex tungsten oxide particles at [001] incidence includes a spot in a number ratio of 0.01% or greater and 10% or less, where the spot is a spot at which a value of a Z-contrast of tungsten atoms is reduced to be 95% or lower of an average value of the Z-contrast of tungsten atoms.

FIG.9B

EP 4 682 107 A1

**Description**

TECHNICAL FIELD

The present invention relates to complex tungsten oxide particles, a near-infrared ray absorbing particle dispersion liquid, and a near-infrared ray absorbing particle dispersion product.

BACKGROUND OF THE INVENTION

Various techniques have been proposed as near-infrared ray shielding techniques that decrease solar transmittance, while achieving desired visible light transmittance and maintaining transparency. Among such techniques, a near-infrared ray shielding technique using inorganic conductive particles has advantages, such as an excellent near-infrared ray shielding ability and a low cost compared with other techniques, and has radio wave transmittance and high weather resistance.

For example, Patent Document 1 discloses a technique related to an infrared shielding material particle dispersion product, in which complex tungsten oxide particles represented by a general formula: $M_xW_yO_z$ (where M is at least one element selected from the group consisting of H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W is tungsten, O is oxygen, $0.001 \leq x/y \leq 1$, and $2.2 \leq z/y \leq 3.0$) are dispersed as infrared shielding material particles in a medium such as a resin, and a method of producing the infrared shielding material particles. Patent Document 1 also discloses an example of producing an infrared ray shielding film that is an infrared ray shielding material particle dispersion product in the form of a thin film, or the like.

According to Patent Document 1, it is possible to produce an infrared ray shielding material particle dispersion product having excellent optical characteristics, such as more efficient shielding of sunlight, especially light in the near infrared region, while maintaining transmittance with light in the visible light region, or the like. Therefore, application of the infrared ray shielding particle dispersion product disclosed in Patent Document 1 in various use, such as window glass or the like has been studied.

In addition, various studies have been conducted on a method of producing complex tungsten oxide particles that are useful as a near-infrared ray shielding material.

For example, the inventors of Patent Document 1 proposes a method of synthesizing $Cs_{0.32}WO_3$ nanoparticles through solid-phase synthesis in Non-Patent Document 1. However, the particles obtained by the synthesis method disclosed in Non-Patent Document 1 have a large particle size, and it is necessary to provide a pulverization process to form the obtained particles into nanoparticles. Therefore, the number of steps of the process may increase.

Patent Document 2 proposes synthesis of potassium cesium tungsten bronze solid solution particles using a plasma torch in a reducing atmosphere.

Non-Patent Document 2 discloses a method of synthesizing $Cs_xWO_3$ through a hydrothermal synthesis method. However, the hydrothermal synthesis method requires a synthesis time of several tens of hours or longer. In addition, the hydrothermal synthesis method has a problem such that a post-treatment process or the like includes many steps.

Non-Patent Document 3 discloses a synthesis method based on an inductively coupled thermal plasma technology. However, such a synthesis method requires installation of an inductively coupled thermal plasma apparatus, and therefore installation and running costs of the apparatus are high.

Non-Patent Document 4 discloses a method of synthesis complex tungsten oxide through flame-assisted water-solvent spray pyrolysis. However, the resultant complex tungsten oxide has a low infrared ray absorbing ability due to a low Cs content.

Non-Patent Document 5 discloses a method of synthesizing complex tungsten oxide through water-solvent spray pyrolysis, and discloses a method of synthesizing complex tungsten oxide with less Cs desorption from surfaces of the complex tungsten oxide particles. However, the resultant complex tungsten oxide has a low infrared ray absorbing ability.

Patent Document 3 and Patent Document 4 disclose a method of producing complex tungsten particles through flame-assisted spray pyrolysis.

RELATED-ART DOCUMENT

Patent Document

Patent Document 1: International Publication No. WO2005/037932

Patent Document 2: Japanese Unexamined Patent Application Publication No. 2012-532822
Patent Document 3: International Publication No. WO2017/129516
Patent Document 4: US Patent Application Publication No. 2010/0102700

Non-Patent Document

Non-Patent Document 1: Takeda Hiromitsu, and Kenji Adachi, "Near infrared absorption of tungsten oxide nanoparticle dispersions." Journal of the American Ceramic Society, 2007, Vol. 90, Issue 12, P. 4059-4061
Non-Patent Document 2: Guo Chongshen, et al., "Novel synthesis of homogenous CsxWO3 nanorods with excellent NIR shielding properties by a water controlled-release solvothermal process." Journal of Materials Chemistry, 2010, Vol. 20, Issue 38, P. 8227-8229.
Non-Patent Document 3: Mamak Marc, et al., "Thermal plasma synthesis of tungsten bronze nanoparticles for near infra-red absorption applications." Journal of Materials Chemistry, 2010, Vol. 20, Issue 44, P. 9855-9857.
Non-Patent Document 4: Hirano, Tomoyuki, et al. "Synthesis of highly crystalline hexagonal cesium tungsten bronze nanoparticles by flame-assisted spray pyrolysis." Advanced Powder Technology 29.10 (2018): 2512-2520.
Non-Patent Document 5: Nakakura, Shuhei, et al. "Improved photochromic stability in less deficient cesium tungsten bronze nanoparticles." Advanced Powder Technology 31.2 (2020): 702-707.

## SUMMARY OF THE INVENTION

### PROBLEMS TO BE SOLVED BY THE INVENTION

As described above, complex tungsten oxide particles are useful as a near-infrared ray shielding material. However, there is a demand for a material having higher visible light transparency and improved infrared ray shielding performance compared to complex tungsten oxide particles known in the related art.

Therefore, one aspect of the present invention aims to provide complex tungsten oxide particles having further improved visible light transparency and infrared ray shielding performance.

### MEANS FOR SOLVING THE PROBLEMS

According to one aspect of the present invention, there are provided complex tungsten oxide particles including complex tungsten oxide. The complex tungsten oxide is represented by a general formula: $M_x W_y O_z$ (where, the M element is at least one element selected from the group consisting of alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; $0.20 \leq x/y \leq 0.37$; and $2.2 \leq z/y \leq 3.3$). A crystal system of the complex tungsten oxide is hexagonal. An STEM-HAADF image of the complex tungsten oxide particles at [001] incidence includes a spot in a number ratio of 0.01% or greater and 10% or less, where the spot is a spot at which a value of a Z-contrast of tungsten atoms is reduced to be 95% or lower of an average value of the Z-contrast of tungsten atoms.

### EFFECTS OF THE INVENTION

According to one aspect of the present invention, complex tungsten oxide particles having excellent visible light transparency and infrared ray shielding performance can be provided.

### BRIEF DESCRIPTION OF THE DRAWINGS

[Fig. 1] Fig. 1 is a schematic view of a complex material production apparatus that is suitably used for a method of producing the complex tungsten oxide particles of the present embodiment.
[Fig. 2] Fig. 2 is an explanatory view of a reduction processing device used for a reduction processing step.
[Fig. 3] Fig. 3 is a schematic view of a near-infrared ray absorbing particle dispersion liquid.
[Fig. 4] Fig. 4 is a schematic view of a near-infrared ray absorbing particle dispersion product.
[Fig. 5] Fig. 5 is a schematic view of a near-infrared ray absorbing laminate.
[Fig. 6] Fig. 6 is a schematic view of a near-infrared ray absorbing transparent substrate.

[Fig. 7] Fig. 7 is a schematic view of a crystal structure of complex tungsten bronze observed at [001] incidence.

[Fig. 8] Fig. 8 is an XRD pattern of the complex tungsten oxide particles obtained in Example 1.

[Fig. 9A] Fig. 9A is an STEM-HAADF image of the complex tungsten oxide particle obtained in Example 1.

[Fig. 9B] Fig. 9B is an STEM-HAADF image of the complex tungsten oxide particle obtained in Example 1.

[Fig. 10A] Fig. 10A is a line profile obtained by quantifying the Z-contrast of tungsten atoms in the line L1 of Fig. 9B.

[Fig. 10B] Fig. 10B is a line profile obtained by quantifying the Z-contrast of tungsten atoms in the line L2 of Fig. 9B.

[Fig. 10C] Fig. 10C is a line profile obtained by quantifying the Z-contrast of tungsten atoms in the line L3 of Fig. 9B.

[Fig. 10D] Fig. 10D is a line profile obtained by quantifying the Z-contrast of tungsten atoms in the line L4 of Fig. 9B.

[Fig. 10E] Fig. 10E is a line profile obtained by quantifying the Z-contrast of tungsten atoms in the line L5 of Fig. 9B.

[Fig. 10F] Fig. 10F is a line profile obtained by quantifying the Z-contrast of tungsten atoms in the line L6 of Fig. 9B.

[Fig. 11A] Fig. 11A is an STEM-HAADF image of the complex tungsten oxide particle obtained in Comparative Example 1.

[Fig. 11B] Fig. 11B is an STEM-HAADF image of the complex tungsten oxide particle obtained in Comparative Example 1.

[Fig. 12A] Fig. 12A is an STEM-HAADF image of the complex tungsten oxide particle obtained in Comparative Example 1.

[Fig. 12B] Fig. 12B is a line profile obtained by quantifying the Z-contrast of tungsten atoms of the complex tungsten oxide particles obtained in Comparative Example 1.

[Fig. 12C] Fig. 12C is a line profile obtained by quantifying the Z-contrast of tungsten atoms of the complex tungsten oxide particles obtained in Comparative Example 1.

[Fig. 12D] Fig. 12D is a line profile obtained by quantifying the Z-contrast of tungsten atoms of the complex tungsten oxide particles obtained in Comparative Example 1.

[Fig. 13A] Fig. 13A is a transmission light profile of the near-infrared ray absorbing particle dispersion liquid according to Example 1.

[Fig. 13B] Fig. 13B is a transmission light profile of the near-infrared ray absorbing particle dispersion liquid according to Comparative Example 1.

[Fig. 14A] Fig. 14A is an STEM-HAADF image of the complex tungsten oxide particle according to Example 1 at [110] incidence.

[Fig. 14B] Fig. 14B is an STEM-HAADF image of the complex tungsten oxide particle according to Example 1 at [110] incidence.

[Fig. 15] Fig. 15 is a diagram schematically illustrating the arrangement of W atoms and Cs atoms of Fig. 14.

[Fig. 16A] Fig. 16A is an XPS spectrum of the W atoms of the complex tungsten oxide particles obtained in Example 1.

[Fig. 16B] Fig. 16B is an XPS spectrum of the W atoms of the complex tungsten oxide particles obtained in Comparative Example 1.

[Fig. 17A] Fig. 17A is a molar extinction coefficient curve of the complex tungsten oxide particles obtained in Example 1.

[Fig. 17B] Fig. 17B is a molar extinction coefficient curve of the complex tungsten oxide particles obtained in Comparative Example 1.

[Fig. 18] Fig. 18 is an optical profile of transmittance of dispersion liquids respectively including the complex tungsten oxide particles of Example 1 and Comparative Example 1.

[Fig. 19A] Fig. 19A is an explanatory diagram illustrating a change in transmittance before and after ultraviolet ray irradiation of the near-infrared ray absorbing particle dispersion product obtained in Example 1.

[Fig. 19B] Fig. 19B is an explanatory diagram illustrating a change in transmittance before and after ultraviolet ray irradiation of the near-infrared ray absorbing particle dispersion product obtained in Comparative Example 1.

[Fig. 20] Fig. 20 is an explanatory diagram illustrating a change in visible light transmittance of the near-infrared ray absorbing particle dispersion products of Example 1 and Comparative Example 1 with respect to a UV light dose.

[Fig. 21A] Fig. 21A is an explanatory diagram illustrating a change in visible light transmittance of the near-infrared ray absorbing particle dispersion product obtained in Example 1 before and after leaving the near-infrared ray absorbing particle dispersion product in an environment at a temperature of 120°C.

[Fig. 21B] Fig. 21B is an explanatory diagram illustrating a change in visible light transmittance of the near-infrared ray absorbing particle dispersion product obtained in Comparative Example 1 before and after leaving the near-infrared ray absorbing particle dispersion product in an environment at a temperature of 120°C.

[Fig. 22] Fig. 22 is an explanatory diagram illustrating a change in visible light transmittance of the near-infrared ray absorbing particle dispersion products obtained in Example 1 and Comparative Example 1 with respect to the number of days the near-infrared ray absorbing particle dispersion products are left in an environment at a temperature of 120°C.

[Fig. 23A] Fig. 23A is an explanatory diagram illustrating a change in visible light transmittance of the near-infrared ray absorbing particle dispersion product obtained in Example 1 before and after leaving the near-infrared ray absorbing particle dispersion product in an environment at relative humidity of 90% and a temperature of 85°C.

[Fig. 23B] Fig. 23B is an explanatory diagram illustrating a change in visible light transmittance of the near-infrared ray absorbing particle dispersion product obtained in Comparative Example 1 before and after leaving the near-infrared ray absorbing particle dispersion product in an environment at relative humidity of 90% and a temperature of 85°C.

[Fig. 24] Fig. 24 is an explanatory diagram illustrating a change in visible light transmittance of the near-infrared ray absorbing particle dispersion products obtained in Example 1 and Comparative Example 1 with respect to the number of days the near-infrared ray absorbing particle dispersion products are left in an environment at relative humidity of 90% and a temperature of 85°C.

DETAILED DESCRIPTION OF THE INVENTION

Specific examples of complex tungsten oxide particles, a near-infrared ray absorbing particle dispersion liquid, and a near-infrared ray absorbing particle dispersion product according to an embodiment of the present disclosure (referred to as "the present embodiment" hereinafter) will be described with reference to drawings hereinafter. The present invention is not limited to these examples. The present invention is defined by the scope of claims, and is intended to include all modifications that are within the meaning and scope equivalent to the scope of claims.

[Complex tungsten oxide particles]

The complex tungsten oxide particles of the present embodiment include complex tungsten oxide. The complex tungsten oxide particles may consist of the complex tungsten oxide. Even in such a case, the complex tungsten oxide particles include inevitable impurities.

The complex tungsten oxide is represented by a general formula: $M_xW_yO_z$.

In the general formula, the M element is at least one element selected from the group consisting of alkali metal elements, alkaline earth metal elements, rare earth elements, Mg (magnesium), Zr (zirconium), Cr (chromium), Mn (manganese), Fe (iron), Ru (ruthenium), Co (cobalt), Rh (rhodium), Ir (iridium), Ni (nickel), Pd (palladium), Pt (platinum), Cu (copper), Ag (silver), Au (gold), Zn (zinc), Cd (cadmium), Al (aluminum), Ga (gallium), In (indium), Tl (thallium), Si (silicon), Ge (germanium), Sn (tin), Pb (lead), Sb (antimony), B (boron), F (fluorine), P (phosphorus), S (sulfur), Se (selenium), Br (bromine), Te (tellurium), Ti (titanium), Nb (niobium), V (vanadium), Mo (molybdenum), Ta (tantalum), Re (rhenium), Be (beryllium), Hf (hafnium), Os (osmium), Bi (bismuth), and I (iodine). In addition, W is tungsten, O is oxygen, and x, y, and z preferably satisfy $0.20 \leq x/y \leq 0.37$ and $2.2 \leq z/y \leq 3.3$.

Examples of the alkali metal elements include Li (lithium), Na (sodium), K (potassium), Rb (rubidium), Cs (cesium), and Fr (francium). Examples of the alkaline earth metal elements Ca (calcium), Sr (strontium), Ba (barium), and Ra (radium). Examples of the rare earth elements include Sc (scandium), Y (yttrium), La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Er (erbium), Tm (thulium), Yb (ytterbium), and Lu (lutetium).

The crystal system of the complex tungsten oxide is hexagonal.

An STEM-HAADF image of the complex tungsten oxide particles at [001] incidence includes a spot in a number ratio of 0.01% or greater and 10% or less, and the spot is a spot at which a value of a Z-contrast of tungsten atoms is reduced to be 95% or lower of an average value of the Z-contrast of tungsten atoms.

(1) Composition

The complex tungsten oxide included in the complex tungsten oxide particles is represented by the general formula: $M_xW_yO_z$ as described above. The M element, W, O, x, y, and z in the formula have already been described, and therefore the redundant description is omitted here.

The complex tungsten oxide can have, for example, at least one tungsten bronze crystal structure selected from the group consisting of tetragonal, cubic, and hexagonal. The complex tungsten oxide included in the complex tungsten oxide particles of the present embodiment is a hexagonal crystal.

In the case where the complex tungsten oxide has a hexagonal crystal structure, the particles have improved light transparency with light in the visible light region, and improved absorption of light in the near-infrared region.

The complex tungsten oxide can also function as an infrared ray shielding material when the complex tungsten oxide has a tetragonal or cubic tungsten bronze crystal structure. However, the light absorption position in a near-infrared ray region tend to change according to a crystal structure of the complex tungsten oxide. The light absorption position in the near-infrared ray region tends to shift toward the long wavelength side when the crystal structure is tetragonal rather than cubic, and the light absorption position tends to shift toward the long wavelength side when the crystal structure is hexagonal rather than tetragonal. In addition, in association with the change in the light absorption position, the hexagonal crystal has the smallest light absorption in the visible light region, the tetragonal crystal has the second smallest light absorption in the visible light region, and the cubic crystal has the largest light absorption in the visible light region. Accordingly, complex tungsten oxide having a hexagonal tungsten bronze crystal structure is preferably used in the application for transmitting more light in the visible light region and shielding more light in the infrared ray region.

In the case where the complex tungsten oxide has a hexagonal crystal structure as described above, the transmittance of the complex tungsten oxide particles with respect to light in the visible light region, and the absorption of light in the near-infrared region by the complex tungsten oxide particles are particularly improved. Thus, the complex tungsten oxide particles preferably include complex tungsten oxide having a hexagonal crystal structure. When at least one selected from the group consisting of Cs, Rb, K, Tl, Ba, and In is used as the M element, a hexagonal crystal structure is easily formed. Therefore, the M element preferably includes at least one selected from the group consisting of Cs, Rb, K, Tl, Ba, and In, and more preferably at least one element selected from the group consisting of Rb and Cs.

The arrangement of the M element when the complex tungsten oxide has a hexagonal crystal structure will be described.

An octahedron is formed using a W (tungsten) atom and six O (oxygen) atoms as a unit. Specifically, O atoms are arranged at vertexes, respectively, and the W atom is arranged at a center to form the octahedron. By assembling six octahedrons, a hexagonal void (tunnel) composed of the O atoms is formed. The M element is arranged in the void to constitute a unit, and a large number of the units are assembled to form a hexagonal crystal structure.

When the complex tungsten oxide having a hexagonal crystal structure has a homogeneous crystal structure, a ratio of an amount of substance of the M element to an amount of substance of W is $0.20 \leq x/y \leq 0.37$, preferably $0.25 \leq x/y \leq 0.37$, and more preferably $0.30 \leq x/y \leq 0.36$. In theory, if the value of x/y is 0.33 when z/y = 3, the M element is assumed to be arranged in each hexagonal void. The above x, y, and z are x, y, and z of the above-described general formula $M_x W_y O_z$, and the same applies hereinafter.

The complex tungsten oxide has a composition in which the M element is added to tungsten trioxide ($WO_3$). Since effective free electrons are not included in tungsten trioxide, an infrared ray absorption effect can be exhibited unless a ratio of oxygen to 1 mole of tungsten is less than 3. However, as the M element is added, free electrons are generated in the complex tungsten oxide, thereby achieving an infrared ray absorption effect. Therefore, the ratio of oxygen to 1 mole of tungsten can be set to 3 or less in the composite tungsten oxide. Further, the ratio of oxygen to 1 mole of tungsten may be greater than 3. However, a crystal phase of $WO_2$ may cause absorption or scattering of light in the visible light region, which may reduce the absorption of light in the near-infrared ray region. Therefore, the ratio of oxygen to 1 mole of tungsten is preferably greater than 2 in view of inhibition of generation of $WO_2$.

Accordingly, z/y, which represents the ratio of oxygen to 1 mole of tungsten, preferably satisfies $2.2 \leq z/y \leq 3.3$ as described above.

(2) Average particle diameter

In the case where the complex tungsten oxide particles of the present embodiment are used, for example, for an application requiring transparency, the complex tungsten oxide particles preferably have an average particle diameter of 800 nm or less. This is because the particles having the average particle diameter of 800 nm or less do not completely shield light by scattering, and can maintain high visibility with light in the visible light region, while efficiently maintaining transparency at the same time. In the case where transparency with respect to light in the visible light region is particularly important, it is preferable to consider scattering of light by the particles.

When reduction in scattering of light by the particles is important, the average particle diameter of the particles is preferably 200 nm or less, and more preferably 100 nm or less.

This is because, when the average particle diameter is small, scattering of light in the visible light region, which includes a wavelength of 400 nm or longer and 780 nm or shorter, due to geometric scattering or Mie scattering is reduced, and as a result, an infrared ray shielding film, such as a near-infrared ray absorbing particle dispersion product or the like, is inhibited from behaving like frosted glass and losing clear transparency. When the average particle diameter is 200 nm or less, the geometric scattering or Mie scattering is reduced, and scattering occurs in the mode of the Rayleigh scattering. Since an amount of light scattered by the particles is reduced in proportion to the sixth power of the average particle diameter of the particles in the Rayleigh scattering mode, the light scattering is reduced along with the reduction in the average particle diameter, which in turn improves transparency. In addition, the average particle diameter of 100 nm or less is preferable because an amount of light scattered is significantly small. From the viewpoint of minimizing light scattering, a smaller average particle diameter is preferable.

Therefore, in the case where it is desirable to maintain high visibility with light in the visible light region as described above, for example, the average particle diameter of the complex tungsten oxide particles of the present embodiment is preferably 800 nm or less, more preferably 200 nm or less, and yet more preferably 100 nm or less. The lower limit of the average particle diameter of the complex tungsten oxide particles is not particularly limited. For example, the lower limit of the average particle diameter is preferably 1 nm or greater, more preferably 5 nm or greater, and yet more preferably 10 nm or greater.

Therefore, the average particle diameter of the complex tungsten oxide particles is preferably 1 nm or greater and 800 nm or less, more preferably 5 nm or greater and 200 nm or less, yet more preferably 10 nm or greater and 200 nm or less, and particularly preferably 10 nm or greater and 100 nm or less.

The average particle diameter of the complex tungsten oxide particles is calculated by measuring a particle diameter of each of the complex tungsten oxide particles in a transmission electron microscopic image. Specifically, three fields of view are selected at a magnification at which 200 or more complex tungsten oxide particles are included in each field of view, the images of the complex tungsten oxide particles are binarized in each field of view, and an average particle diameter is calculated by image analysis.

Specifically, a circle-equivalent diameter is calculated from an area of each of the complex tungsten oxide particles, and is determined as a particle diameter of a respective complex tungsten oxide particle. The average particle diameter can be calculated by adding the particle diameters of all the complex tungsten oxide particles on which the evaluation is performed, and dividing the sum by the number of the particles on which the evaluation is performed. Specifically, the arithmetic mean value of the particle diameters of the evaluated complex tungsten oxide particles can be determined as the average particle diameter.

(3) Atomic number (Z) contrast of tungsten atom of complex tungsten oxide particle

In an STEM-HAADF image (STEM-High-Angle Annular Dark Field) of the complex tungsten oxide particles of the present embodiment at [001] incidence, a dark portion is preferably included in the number ratio of 0.01% or greater and 10% or less, more preferably 0.1% or greater and 10% or less, and yet more preferably 0.2% or greater and 10% or less in the atomic number (Z) contrast (referred to as "the Z-contrast" hereinafter) of the tungsten atoms. The STEM-HAADF image of the complex tungsten oxide particles at [001] incidence is an image observing a basal plane of the complex tungsten oxide.

According to the study conducted by the inventors of the present invention, visible light transparency and infrared ray shielding performance can be particularly enhanced, when the complex tungsten oxide particles have an appropriately small amount of oxygen defects, which are difficult to grasp in an XRD pattern or the like.

Since the STEM-HAADF image of the complex tungsten oxide particles includes a dark portion in the number ratio of 10% or less in the Z-contrast of tungsten atoms (also referred to as "W atoms" hereinafter), W that remains in the vicinity of the W defect site is oxidized so that the oxygen defects can be included to the extent that are not excessive in an amount. Since the STEM-HAADF image of the complex tungsten oxide particles includes a dark portion in the number ratio of 0.01% or greater in the Z-contrast of W atoms, an appropriate oxygen defects can be introduced.

The dark portion in the Z-contrast of W atoms of the complex tungsten oxide particles indicates a defect of the W atom. Each dark portion in the Z-contrast of the W atoms refers to a spot (point) at which a value of the Z-contrast of W atoms is reduced to 95% or less of a reference value. The reference value is an average value of the Z-contrast for the W atoms included in an observed field of view of the STEM-HAADF image of the complex tungsten oxide particles.

An STEM-HAADF image depicts particles that can be observed at [001] incidence, and enables to selectively observe particles in the size of several tens nanometers or greater among dispersed complex tungsten oxide particles. In addition, the observation is performed by adjusting the size of the observation field of view to a 20 nm-side square or larger and a 50 nm-side square or smaller in order to extract the contrast of the W atom spots.

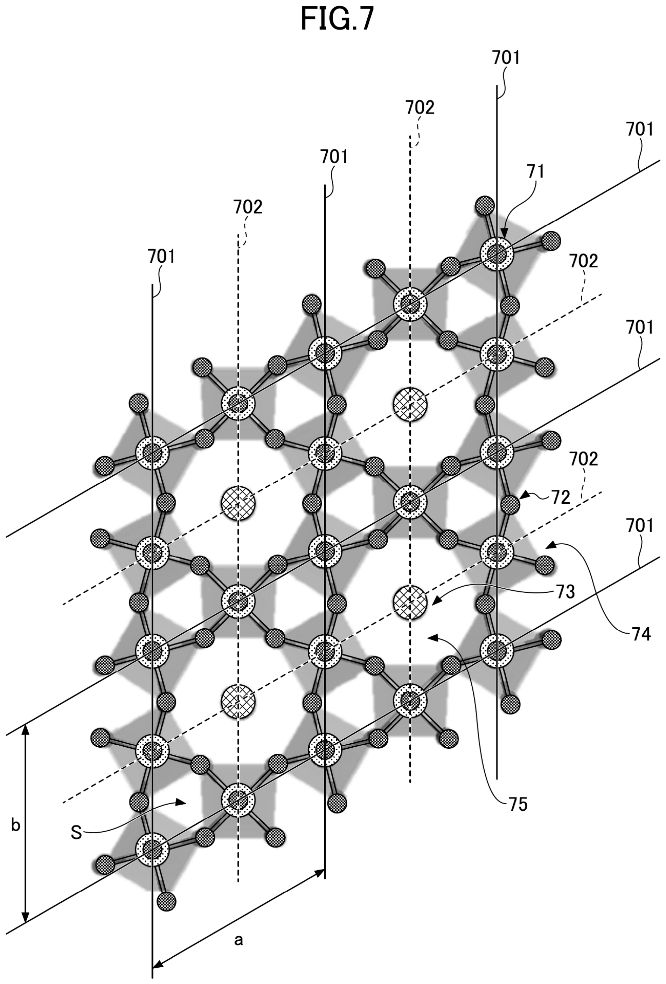

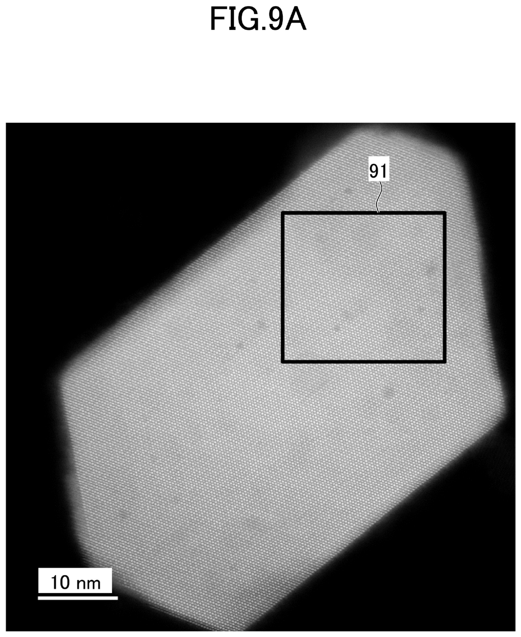

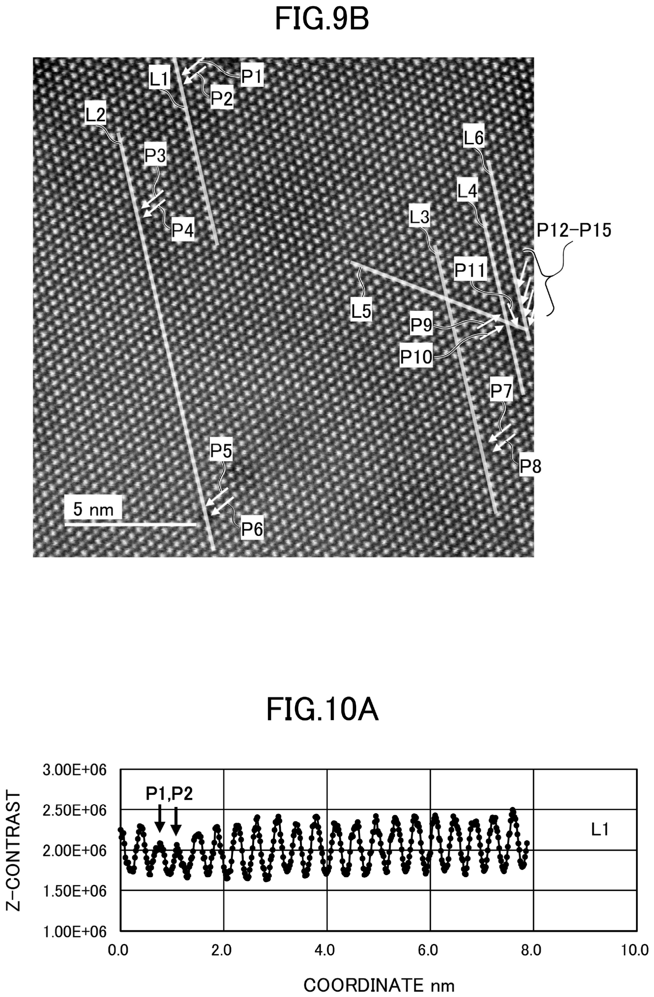

Fig. 7 illustrates a relationship between a (001) plane crystal structure of hexagonal $Cs_{0.33}WO_3$ and W atom/W atom arrays (also referred to as "W/W arrays" hereinafter). Fig. 7 is a schematic view of a crystal structure of a complex tungsten bronze observed at [001] incidence. Figs. 9A and 9B illustrate STEM-HAADF images of the $Cs_{0.33}WO_3$ particle obtained in Example 1. In addition, Figs. 10A to 10F illustrate the Z-contrast of W atoms of the W atom/W atom arrays at the lines L1 to L6 illustrated in Fig. 9B, respectively.

Each spot where a dark portion in the Z-contrast of W atoms is observed is a spot at which the contrast is weak, such as the point P1 or the point P2 of Fig. 9B, and indicates a W atom defect. In Fig. 9B, the tip of the arrow provided with a symbol, such as P1 or the like, indicates a point of the dark portion.

The Z-contrast of W atoms can be determined from an image (STEM-HAADF) obtained by detecting only electrons transmitted at a large scattering angle among electrons transmitted through a sample, when the sample is observed by a scanning transmission electron microscope in high-angle annular dark-field mode (STEM-HAADF). Since the value of the scattering angle is proportional to the square of an atomic number (Z), an element having a larger atomic number appears brighter in the contrast. Therefore, a contrast reflecting a difference in a composition or elements can be obtained. In the case of the complex tungsten bronze, a M element, such as Cs or the like, and a W atom can be distinguished by the difference appearing in the contrast.

In the present embodiment, a difference in the contrast intensity at tungsten columns (W columns) that are spots (points) where tungsten atoms are arranged, respectively, in the STEM-HAADF image is used to distinguish between W atom defect sites and non-defective sites. If a W atom defect occurs, the maximum value of the intensity in the Z-contrast decreases at a corresponding spot. A W atom defect site on the (001) plane of hexagonal $Cs_{0.33}WO_3$ is represented by a lower intensity in the contrast than the average value of the Z-contrast of the spots where the W atoms are respectively arranged in the W atom/W atom arrays. The W atom defect spots form a W atom defect region extending in a columnar shape in the (001) direction. The largest region extends beyond 10 nm in the (001) direction. In the (001) plane, no W atom defects communicating at the 5 nm or greater is confirmed.

How a Z-contrast of W atoms is confirmed from an STEM-HAADF image of the complex tungsten oxide particles at [001] incidence will be described through a process of synthesizing the complex tungsten oxide particles of the present embodiment.

The (001) plane of the hexagonal complex tungsten oxide will be described based on a crystal structure. As illustrated in Fig. 7, six octahedrons 74 are assembled together to form a hexagonal void (tunnel) 75 composed of O atoms 72; and each octahedron 74 is an octahedron 74 composed of a W atom 71 and six O atoms 72 as a unit, that is, an octahedron 74 in which O atoms are arranged at the vertexes, respectively, and a W atom 71 is arranged at the center. In Fig. 7, circles with the same hatching represent the same atoms.

AM element 73 is arranged in the hexagonal void 75 composed of the O atoms 72 to constitute one cell unit. A large number of the cell units are assembled to form a hexagonal crystal structure. The hexagonal void 75 is parallel to the (001) plane. Moreover, the (001) plane is perpendicular to the c-axis. By observing the (001) plane, the difference between the M element 73 and the W atom 71 can be crystallographically distinguished.

The change in the crystal structure of the particles in the course of synthesis will be described by taking $Cs_{0.33}WO_3$ particles as an example of the complex tungsten oxide particles of the present embodiment. As described later, the complex tungsten oxide particles of the present embodiment are produced through a raw material preparation step, an aerosol formation step, a heat treatment step, and a reduction processing step. The raw materials formed into an aerosol in the aerosol formation step are rapidly heated at 500°C or higher in the heat treatment step, causing a reaction that transforms the raw materials into complex tungsten oxide to progress through short-duration heating. After heating, the reaction product is rapidly cooled to stop the reaction of transforming the raw materials into complex tungsten oxide. The complex tungsten oxide particles obtained by the heat treatment step include a hexagonal crystal phase ($Cs_{0.33}WO_3$) and heterophases ($Cs_4W_{11}O_{35}$, $(Cs_2O)_{0.44}WO_6$, etc.). It can be confirmed from observation of the STEM-HAADF image of the complex tungsten oxide particles that a large amount of W atom defects is included. The W atom defect site is a site with excess Cs, which contributes formation of a heterophase.

The complex tungsten oxide particles including the heterophases obtained by the heat treatment step is provided to a reduction processing step in which oxygen is not supplied, thereby rearranging Cs atoms, which are the M element, W atoms, and O atoms. Since the atoms are rearranged, the complex tungsten oxide particles are transformed into the complex tungsten oxide particles with which dark portions are observed in the Z-contrasts of W atom in the STEM-HAADF image observation at [001] incidence. The dark portions in the Z-contrast of W atoms in the STEM-HAADF image of the complex tungsten oxide particles obtained by the reduction processing step at [001] incidence are assumed to be traces of the above-described heterophases or W atom defects.

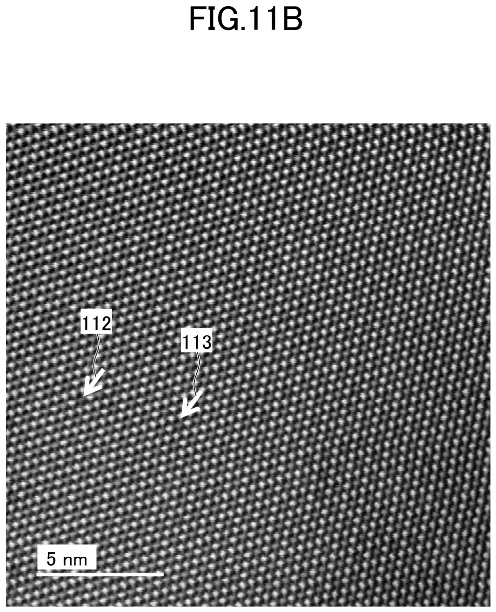

Conversely, in the case where complex tungsten oxide particles are synthesized by heating raw materials for a longer period compared to Example 1 in a reducing atmosphere without forming the raw materials into an aerosol, as described in Comparative Example 1 below, monocrystalline hexagonal complex tungsten oxide particles can be obtained. When an STEM-HAADF image of the complex tungsten oxide particles, which are prepared without forming the raw materials into an aerosol, at [001] incidence is observed, as illustrated in Fig. 11B that is the evaluation result of Comparative Example 1, dark portions in the Z-contrast of W atoms are unlikely to be confirmed.

The STEM-HAADF image of the complex tungsten oxide particles of the present embodiment at [110] incidence (prism plane) may include a planar defect in the direction perpendicular to the c-axis.

The planar defect is caused by the W atom defect. Further, there is a space where atoms of the M element, such as cesium or the like, and W atoms are not present in the c-axis direction.

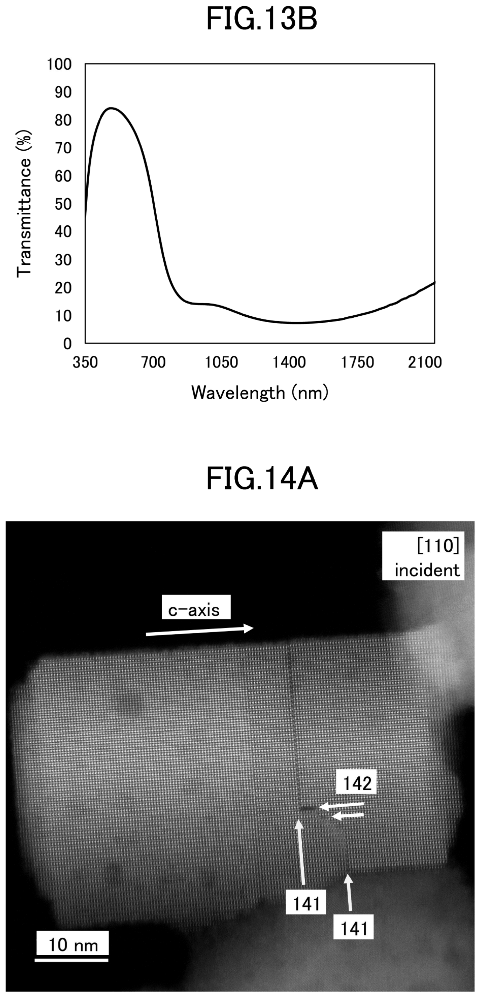

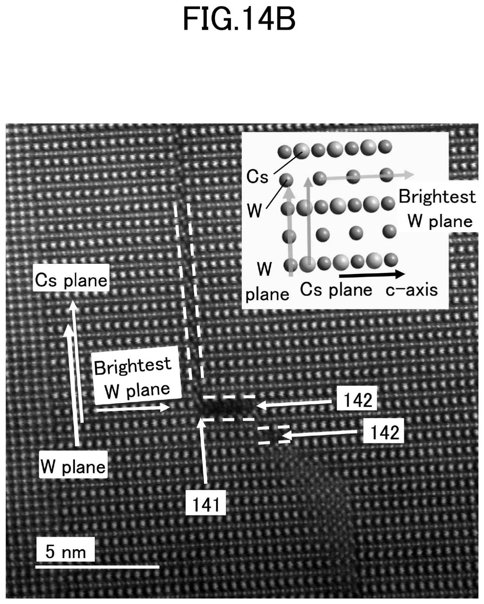

Figs. 14A and 14B are STEM-HAADF images of the complex tungsten oxide particle according to Example 1 at [110] incidence. The presence of the approximately 30 nm-long planar defect 141 in the direction perpendicular to the c-axis, which is a basal plane defect due to the W atom defect, is confirmed in Fig. 14A. Moreover, the presence of the approximately 3 nm-long space 142 in the c-axis direction, where Cs atoms and W atoms are not present, is confirmed.

Fig. 14B is a magnified view of Fig. 14A. It is considered that, when Cs atoms and W atoms are rearranged within a crystal in the heat treatment step, an interface between crystallized regions remains as the planar defect 141, which is a basal plane defect, and as the space 142 along the c-axis direction where Cs and W are not present.

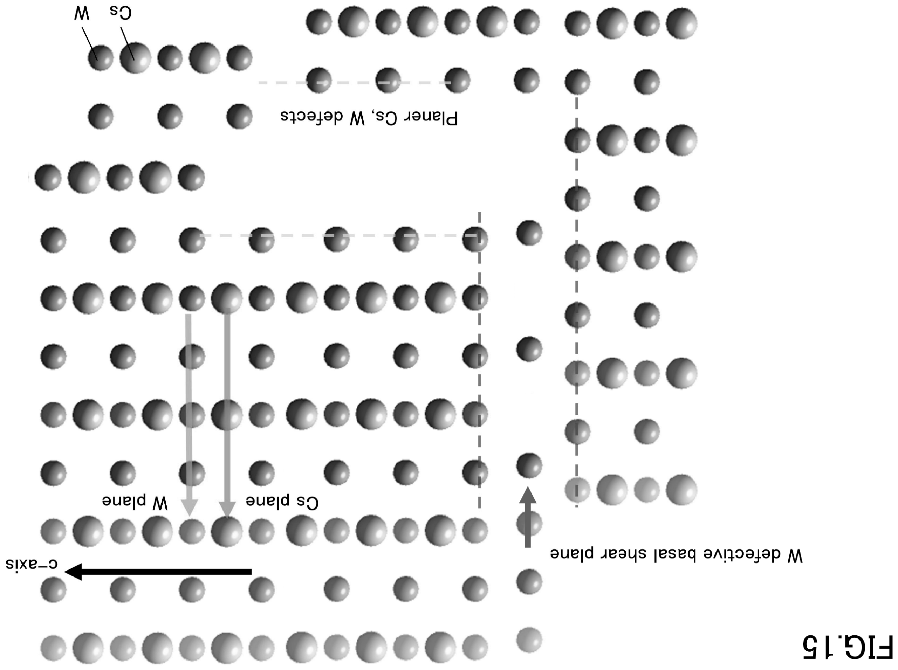

In addition, it is confirmed that the crystal structure is distorted in a manner that the atomic arrangements in the both sides of the planar defect 141 are shifted by a 1/4 cycle due to the W atom defect in the length of approximately 30 nm in the direction perpendicular to the c-axis.. Fig. 15 is a diagram schematically illustrating the arrangement of the W atoms and the Cs atoms of Figs. 14A and 14B.

As described above, dark portions are observed in the Z-contrast of W atoms in the STEM-HAADF image of the complex tungsten oxide particles of the present embodiment at [001] incidence, and the dark portions are assumed to be traces of W atom defects present before the reduction processing step. It can be confirmed that the complex tungsten oxide particles of the present embodiment before the reduction processing step in the synthesis process include a large number of W atom defects. The W atom defect sites are sites with excessive Cs, which contributes to formation of heterophases other than a hexagonal crystal phase. When W atoms are rearranged to form a hexagonal structure in the reduction processing step, a planar defect in the direction perpendicular to the c-axis, that is, a defect of the (001) plane that is a basal plane, may be formed. It is considered that the presence of the above defects promotes rearrangement of W atoms, which facilitates maintenance of the hexagonal structure, in the reduction processing step. It is considered that, in the process of rearrangement of W atoms that facilitates maintenance of the hexagonal structure, a W atom defect (planar defect) is formed on the prism plane, thereby maintaining the hexagonal structure in the region of the complex tungsten oxide where the defect is not formed.

As described above, it is considered that, in theory, the M element is arranged in the hexagonal complex tungsten oxide in the largest amount, because a value of x/y takes 0.33 when z/y = 3. In the above description and the following description, x, y, and z refer to x, y, and z, respectively in the above-described general formula of the complex tungsten oxide particles. The ratio of the amount of substance of the M element to the amount of substance of the W element is $0.20 \leq x/y \leq 0.37$, preferably $0.25 \leq x/y \leq 0.37$, and more preferably $0.30 \leq x/y \leq 0.36$. When the ratio of the amount of substance of the M element is in the range of $0.20 \leq x/y \leq 0.37$, even if a defect is formed in the prism plane due to the rearrangement of W atoms, the complex tungsten oxide particles having an excellent infrared ray absorbing ability, while maintaining the hexagonal structure, can be provided. When the amount of the M element is small, for example, in the case of x/y being less than 0.20, it is difficult to form a hexagonal structure, and even if a hexagonal structure is formed, an amount of free electrons supplied to the 5d orbital of the W atom is small, which leads to low infrared ray absorbing ability.

On the other hand, when the ratio (x/y) of the amount of substance of the M element to the W element is greater than 0.37, an excessive amount of the M element is present, and therefore a large number of W atom defects are formed in the basal plane as well as the prism plane. In addition a heterophase, such as a pyrochlore phase or the like is formed other than the hexagonal structure, leading to insufficient infrared ray absorbing ability. The defect in the basal plane is a planar or band-shaped defect having a length of 10 nm or greater in the (001) direction.

According to the study conducted by the inventors of the present invention, the defect is observed as a band-shaped defect in the STEM-HAADF image (basal plane image) of the complex tungsten oxide particles having a ratio (x/y) of greater than 0.37 at [001] incidence, where the ratio (x/y) is a ratio of the amount of substance of the M element to the amount of substance of the W element. The band-shaped defect is a planar W atom defect parallel to the c-axis. This phenomenon is caused because the number of atoms of the M element is excessive relative to the number of W atoms. The excessive number of atoms of the M element causes generation of a heterophase, such as a pyrochlore phase, other than a hexagonal crystal structure in the process of the rearrangement of W atoms, and also causes a band-shaped W atom defect having a length of 10 nm or greater in the basal plane of the complex tungsten oxide particles. It is considered that, when a W atom defect site having a length of 10 nm or greater is formed in the basal plane, defect sites start to be formed periodically, which stabilize the heterophase, such as a pyrochlore phase or the like.

In the case where the complex tungsten oxide particles of the present embodiment are industrially synthesized, blending of an M element source and a W element source may become uneven in the below-described raw material preparation step. In this case, the ratio (x/y) of the amount of substance of the M element and the amount of substance of the W element becomes larger than 0.37 in part of the mixture, and a band-shaped W atom defect having a length of 10 nm or greater may be formed in a basal plane of part of the resultant complex tungsten oxide particles. However, the infrared absorption ability of the complex tungsten oxide particles is not impaired as long as a number ratio of the particles having the above defects is less than 20%.

(4) Evaluation of complex tungsten oxide particles by XPS

W atoms in the complex tungsten oxide particles that absorb infrared rays are in the electron states of $W^{5+}$ and $W^{6+}$ due to oxygen vacancies. The oxidized state of the complex tungsten oxide particles can be evaluated by separating the intensity of the 4f orbital of the W atom in the XPS spectrum into the intensity due to $W^{6+}$ and the intensity due to $W^{5+}$. It can be confirmed from separation of the XPS spectrum that the oxidized state of the complex tungsten oxide particles according to Example 1, which are one example of the complex tungsten oxide particles of the present embodiment, is progressed further compared to the complex tungsten oxide particles known in the art, exemplified in Comparative Example 1.

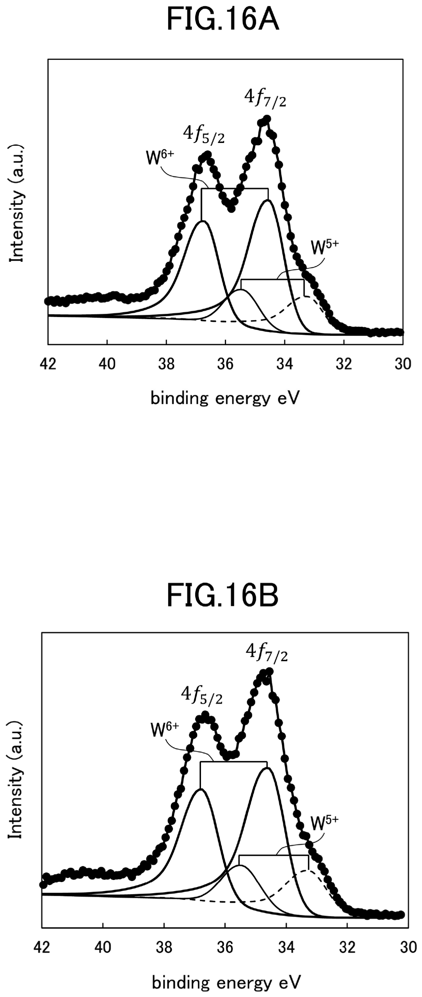

Fig. 16A is a 4f profile of the W atom obtained by XPS of the complex tungsten oxide particles according to Example 1. Moreover, Fig. 16B is a 4f profile of the W atom obtained by XPS of the cesium tungsten complex oxide particles according to Comparative Example 1.

In the XPS spectrum of the hexagonal complex cesium tungsten oxide, $W^{6+}$ has a peak of $4f_{7/2}$ at the binding energy ranging from 34 eV to 36 eV, and a peak of $4f_{5/2}$ at the binding energy ranging from 36 eV to 38 eV. $W^{5+}$ has a peak of $4f_{7/2}$ at the binding energy ranging from 32 eV to 34 eV, and a peak of $4f_{5/2}$ at the binding energy ranging from 35 eV to 37 eV.

Based on the above insights, separation of the peaks of XPS can be performed by fixing the peak gap between W4f$_{7/2}$ and W4f$_{5/2}$ to 2.18 eV and the peak area ratio to 0.75, applying the Gaussian distribution or Lorentzian distribution, and fitting the distribution to the profile measured by the method of least squares. By determining a ratio of the intensity of W$^{5+}$ to the total intensity of W$^{6+}$ and W$^{5+}$ in XPS, the oxidized state of the W atoms of the complex tungsten oxide particles can be understood. For the peak separation, the background of the profile is removed, and the half widths of W4f$_{7/2}$ and W4f$_{5/2}$ are matched with each other.

In XPS of the complex tungsten oxide particles according to Example 1, the ratio of the intensity of W$^{5+}$ to the total intensity of W$^{6+}$ and W$^{5+}$ is 24.9%, whereas the ratio is 25.96% in XPS of the complex tungsten oxide particles according to Comparative Example 1. As a result of the separation between the intensity of W$^{6+}$ and the intensity of W$^{5+}$ in XPS, the complex tungsten oxide particles of Example 1 whose profile is depicted in Fig. 16A have a smaller ratio of W$^{5+}$, i.e., a larger ratio of W$^{6+}$, compared with the complex tungsten oxide particles of Comparative Example 1 illustrated in Fig. 16B, thus indicating oxidation being progressed further in the complex tungsten oxide particles of Example 1.

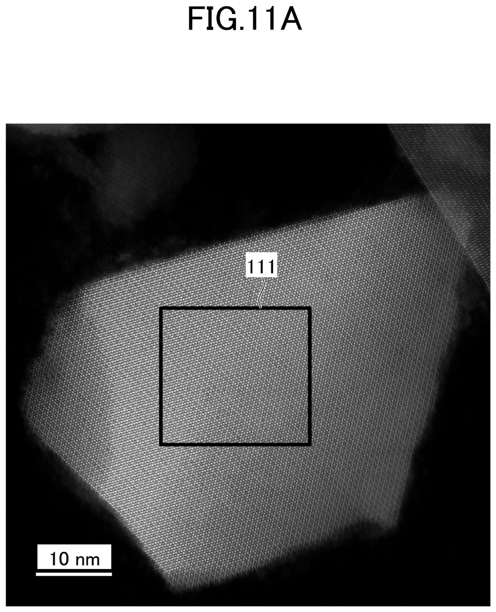

The reason why the ratio of W$^{5+}$ is small and the oxidation is progressed in Example 1 is assumed to be that, as illustrated in Figs. 11A and 11B or Figs. 14A or 14B, the W atoms in the crystal are bonded to oxygen atoms to be stabilized due to the presence of the W defects formed in the c-axis direction or the basal plane direction.

The above example is merely one example. As described above, the complex tungsten oxide particles of the present embodiment can be produced by performing a heat treatment or the like after forming raw materials into an aerosol. The complex tungsten oxide particles produced by the production method including formation of an aerosol of raw materials tend to be oxidized further than known complex tungsten oxide particles obtained by synthesizing through solid-phase synthesis, and pulverizing or the like.

(5) Peak separation and integrated intensity of localized surface plasmon absorption and polaron absorption of complex tungsten oxide particles

The oxidized state of the complex tungsten oxide particles of the present embodiment affects the optical characteristics of the complex tungsten oxide particles. A molar extinction coefficient curve obtained from an absorption curve of a dispersion liquid or dispersion product of the complex tungsten oxide particles will be examined. The absorption in the absorption curve is caused by localized surface plasmon absorption of the particles and the polaron absorption of the particles. The above absorptions are combined and are represented as the absorption curve.

In the case of the complex tungsten oxide particles, localized surface plasmon absorption exhibits anisotropy with respect to the c-axis. Specifically, in the case of the complex tungsten oxide particles, the localized surface plasmon absorption includes absorption of the localized surface plasmon resonance (LSPR⊥) in the direction perpendicular to the c-axis, and absorption of the localized surface plasmon resonance (LSPR//) in the direction parallel to the c-axis.

Specifically, the absorption of light by the complex tungsten oxide particles includes three absorption components, which are absorption due to localized surface plasmon resonance (LSPR⊥) in the direction perpendicular (perpendicular direction) to the c-axis, absorption due to localized surface plasmon resonance (LSPR//) in the direction parallel (parallel direction) to the c-axis, and polaron absorption. Therefore, the molar extinction coefficient curve of the complex tungsten oxide particles can be separated into three absorption curves.

Specifically, the wavelength in the horizontal axis of the molar extinction coefficient curve is converted into the energy (eV), and fitting of the molar extinction coefficient curve is performed by applying the Gaussian distribution or Lorentzian distribution based on the theory of Mie scattering. Then, the molar extinction coefficient curve is separated into an absorption curve of absorption due to localized surface plasmon resonance (LSPR⊥) in the direction perpendicular to the c-axis, an absorption curve of absorption due to localized surface plasmon resonance (LSPR//) in the direction parallel to the c-axis, and absorption curve of the polaron absorption.

In the operation of separating the molar extinction coefficient curve, the average value (peak energy (wavelength)) of the Gaussian distribution or Lorentzian distribution can be determined by determining the absorption curve of the absorption due to localized surface plasmon resonance (LSPR⊥) in the direction perpendicular to the c-axis, and the absorption curve of the absorption due to localized surface plasmon resonance (LSPR//) in the direction parallel to the c-axis, and the absorption curve of the polaron absorption. The Gaussian distribution is represented by the equation (1).
[Math. 1]

$$\sigma_g = A \exp\left\{-\frac{(E-b)^2}{2c^2}\right\} \qquad (1)$$

In the equation (1), A is a peak intensity, b is an arithmetic mean, E is energy, and c is a standard deviation.
The Lorentzian distribution is represented by the following equation (2).
[Math. 2]

$$\sigma_R = \frac{1}{\pi} \frac{d}{(E-b)^2 + d^2} \qquad (2)$$

In the equation (2), E is energy, b is an arithmetic mean, and d is a constant.

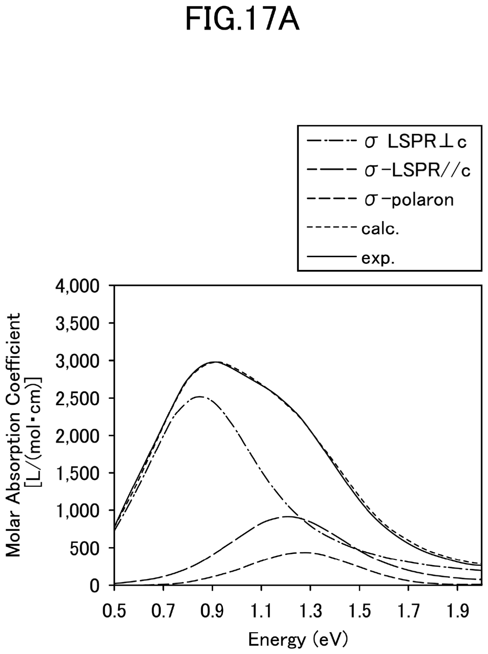

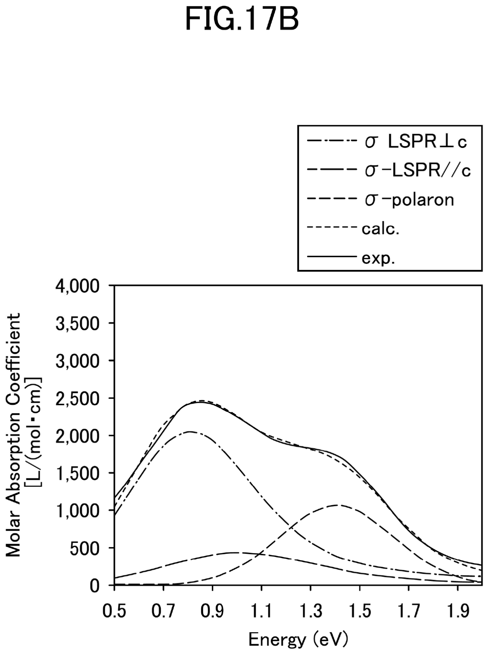

The results of separating the absorption curves at 0.5 eV or greater and 2.0 eV or less (wavelength of 620 nm or longer and 2,500 nm shorter) using the above functions are exhibited in Figs. 17A and 17B. The near-infrared ray region (wavelength region of 780 nm or greater and 2,500 nm or less) is in the range of 0.5e V or greater and 1.59 eV or less.

Fig. 17A illustrates a molar extinction coefficient curve of the complex tungsten oxide particles according to Example, as one example of the complex tungsten oxide particles of the present embodiment. Moreover, Fig. 17B illustrates a molar extinction coefficient curve of the complex tungsten oxide particles according to Comparative Example 1, as one example of the complex tungsten oxide particles obtained by synthesis through known solid-phase synthesis and pulverizing. The peak position, the peak intensity, and the integrated intensity of each of the absorption curves of the three absorption components are presented in Table 2. Moreover, a ratio of the integrated intensity of each of the absorption curves of the three absorption components to the integrated intensity of the molar extinction coefficient curve is presented in Table 3.

Figs. 17A and 17B merely illustrate examples, and the absorption curves in Figs. 17A and 17B are examples. The absorption curve is not limited to the absorption curves in Figs. 17A and 17B. The complex tungsten oxide particles of the present embodiment demonstrate the similar characteristic as the molar extinction coefficient curve illustrated in Fig. 17A.

The absorption curve of the localized surface plasmon resonance (LSPR⊥) of the complex tungsten oxide particles according to Example 1 in the direction perpendicular to the c-axis, which is illustrated in Fig. 17A, has the absorption peak at 0.86 eV (wavelength: 1,435 nm), and the integrated intensity of 96,015.38 [L·eV/(mol·cm)].

In the molar extinction coefficient curve illustrated in Fig. 17A, the absorption curve of the localized surface plasmon resonance (LSPR//) in the direction parallel to the c-axis has the absorption peak at 1.20 eV (wavelength: 1,030 nm), and the integrated intensity of 33,042.00 [L·eV/(mol·cm)].

In the molar extinction coefficient curve illustrated in Fig. 17A, the absorption curve of the polaron absorption has the absorption peak at 1.26 eV (wavelength; 985 nm), and the integrated intensity of 12,265.60 [L·eV/(mol·cm)].

Among the integrated intensities of the three absorption curves of the molar extinction coefficient curve illustrated in Fig. 17A, the ratio of the integrated intensity of the absorption curve of polaron absorption is 8.7%. The complex tungsten oxide particles of Example 1 are synthesized by forming an aerosol, followed by performing a heat treatment or the like, and therefore the integrated intensity of the polaron absorption is reduced compared to complex tungsten oxide particles synthesized through solid-phase synthesis that has been known in the related art.

On the other hand, Fig. 17B illustrates a molar extinction coefficient curve of the complex tungsten oxide particles according to Comparative Example 1 obtained by synthesizing through known solid-phase synthesis and pulverizing. In the molar extinction coefficient curve illustrated in Fig. 17B, the absorption curve of the localized surface plasmon resonance (LSPR⊥) in the direction perpendicular to the c-axis has the absorption peak at 0.80 eV (wavelength: 1,550 nm) and the integrated intensity of 78,843.30 [L·eV/(mol·cm)].

In the molar extinction coefficient curve illustrated in Fig. 17B, the absorption curve of the localized surface plasmon resonance (LSPR//) in the direction parallel to the c-axis has the absorption peak at 1.00 eV (wavelength: 1,240 nm) and the integrated intensity of 20,209.67 [L·eV/(mol·cm)].

In the molar extinction coefficient curve illustrated in Fig. 17B, the absorption curve of the polaron absorption has the absorption peak at 1.40 eV (wavelength: 885 nm) and the integrated intensity of 31,174.01 [L·eV/(mol·cm)].

Among the integrated intensities of the three absorption curves of the molar extinction coefficient curve illustrated in Fig. 17B, a ratio of the integrated intensity of the absorption curve of the polaron absorption is 23.9%.

As it is clear from comparison between the ratios of the integrated intensities of the absorption curves of the polaron absorption, the polaron absorption of the complex tungsten oxide particles of Example 1 is weaker than the polaron absorption of the complex tungsten oxide particles of Comparative Example 1. This is also demonstrated from the fact that the peak value of the absorption curve of the polaron absorption of the complex tungsten oxide particles of Example 1 appearing at 1.26 eV (wavelength: 985 nm) is weaker than the peak value of the polaron absorption of the complex tungsten oxide, which is synthesized through solid-phase synthesis, appearing at 1.40 eV (wavelength: 885 nm).

Further, the ratios of the integrated intensities of the absorption curves LSPR⊥ and LSPR// of the complex tungsten oxide particles of Example 1, which are absorption due to localized surface plasmon resonance, are large. In particular, the ratio of the integrated intensity of the absorption curve of LSPR// of the complex tungsten oxide particles of Example 1 is larger than the ratio of the integrated intensity of the absorption curve of LSPR// of the complex tungsten oxide particles of Comparative Example 1 obtained by synthesizing through solid-phase synthesis and pulverizing. The above difference in the absorption state appears in the optical characteristics.

The integrated intensity of each of the three absorption curves is an integrated intensity at 0.5 eV or greater and 2.0 eV or less (wavelength of 620 nm or greater and 2,500 nm or less). By comparing the integrated intensities of the three absorption components, which the localized surface plasmon resonance (LSPR⊥) in the direction perpendicular to the c-axis, the localized surface plasmon resonance (LSPR//) in the direction parallel to the c-axis, and the polaron absorption, in the above range, contribution of the three absorption components in the near-infrared ray region (wavelength of 780 nm or greater and 2,500 nm or less) can be understood.

Further, absorption having a peak appears in the order of the localized surface plasmon resonance in the direction perpendicular to the c-axis, the localized plasmon absorption in the direction parallel to the c-axis, and the polaron absorption from the low energy side. Specifically, the absorption due to polaron appears in the high region of high energy (on the short wavelength side of the near-infrared ray region).

It has been known that the absorption of the complex tungsten oxide particles due to polaron is caused by the $W^{5+}$ state of W atoms in the crystals constituting the particles. As demonstrated in the results of XPS described above, the complex tungsten oxide particles of the present embodiment have a small number of $W^{5+}$ formed due to oxygen defects. Therefore, when peak separation of the molar extinction coefficient curve is performed, a ratio of the polaron absorption occupying the absorption is small compared to complex tungsten oxide particles known in the related art.

Further, a molar absorption coefficient of the powder constituting the complex tungsten oxide particles in the dispersion product or dispersion liquid can be determined from the molar extinction coefficient curve. The molar absorption coefficient of the powder composed of the complex tungsten oxide particles is desirably 2,600 L/(mol·cm) or greater, and more desirably 2,800 L/(mol·cm) or greater.

By adjusting production conditions, even complex tungsten oxide particles known in the related art can be configured to have a lower peak value of the absorption curve of the polaron than the peak value of the absorption curve of the localized surface plasmon absorption in the direction parallel to the c-axis.

However, when the peak value of the absorption curve of the polaron absorption of the complex tungsten oxide particles known in the related art is lower than the peak value of the absorption curve of the localized surface plasmon absorption in the direction parallel to the c-axis, the molar absorption coefficient of the complex tungsten oxide particles known in the related art becomes less than 2,000 L/(mol·cm). It is desirable for an infrared ray shielding material to have a high molar absorption coefficient. As the infrared ray shielding material has a high molar absorption coefficient, an excellent infrared ray shielding effect can be exhibited with a small amount of the infrared ray absorbing material.

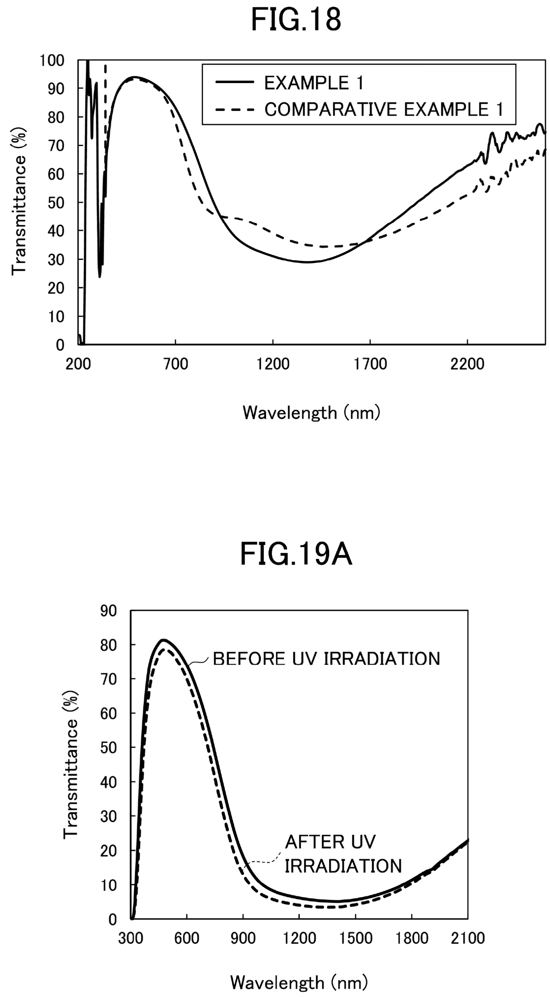

Fig. 18 illustrates an optical profile of transmittance of a dispersion liquid including 0.5 g/m$^2$ of the complex tungsten oxide particles according to Example 1, and an optical profile of transmittance of a dispersion liquid including 0.5 g/m$^2$ of the complex tungsten oxide particles of Comparative Example 1, which are one example of complex tungsten oxide particles known in the related art. The molar absorption coefficient of the complex tungsten oxide particles according to Example 1 determined from the optical profile of the transmittance illustrated in Fig. 18 is 3,000 L/(mol·cm). The molar absorption coefficient of the complex tungsten oxide particles according to Comparative Example 1 is 2,500 L/(mol·cm). As illustrated in Fig. 18, even when the amount of the complex tungsten oxide particles per unit area is the same, the transmittance of the complex tungsten oxide particles according to Example 1, which are one example of the complex tungsten oxide particles of the present embodiment, is low at a wavelength of approximately 900 nm to approximately 1,680 nm, specifically, an effect of absorbing near-infrared rays is high.

(6) Change in optical characteristics of complex tungsten oxide particles

The complex tungsten oxide of the present embodiment has excellent optical characteristics owing to a crystal structure or oxidized state of the complex tungsten oxide.

One of excellent optical characteristics of the complex tungsten oxide of the present embodiment is that transmittance of a dispersion product in which the complex tungsten oxide particles of the present embodiment are dispersed in a resin matrix is unlikely to decrease even after irradiating the dispersion product with ultraviolet rays. A phenomenon of decreased transmittance is a coloring phenomenon of the complex tungsten oxide particles due to photochromic.

Fig. 19A illustrates a change in transmittance before and after irradiating the near-infrared ray absorbing particle dispersion product according to Example 1, which is one example of the dispersion product in which the complex tungsten oxide particles of the present embodiment are dispersed in a solid medium, with UV rays.

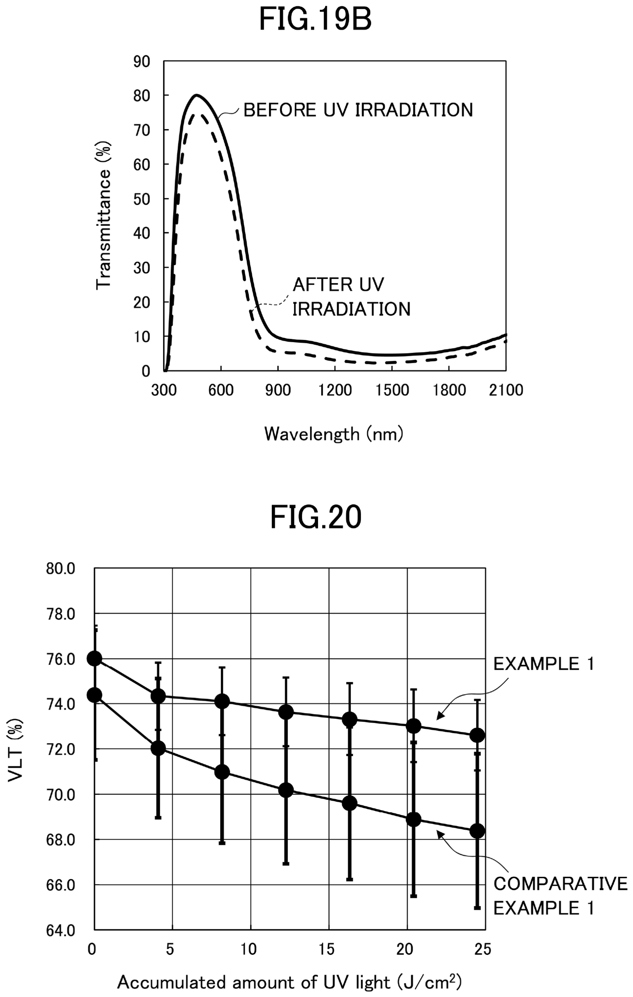

Fig. 19B illustrates a change in transmittance before and after irradiating the near-infrared ray absorbing particle dispersion product according to Comparative Example 1, which is one example of a dispersion product using complex cesium tungsten oxide particles obtained by synthesizing through known solid-phase synthesis and pulverizing, with UV rays.

Fig. 20 illustrates visible light transmittance (VLT) of the both dispersion products relative to UV irradiation dose. It has been known that the coloring phenomenon by UV irradiation is caused, as hydrogen radicals are generated in the resin irradiated with UV rays, and the generated hydrogen radicals enter atomic defects of M element (Cs atom). The complex tungsten oxide particles of the present embodiment have a hexagonal crystal structure formed by rearrangement of W atoms, and have a small number of atomic defects of the M element (Cs atoms). It is considered that, since the complex tungsten oxide particles have a small number of atomic defects of the M element, a change in transmittance of the obtained dispersion liquid or dispersion product after UV irradiation is small. The above UV resistance is also an effect obtained by rearrangement of W atoms, which forms a hexagonal crystal structure of the complex tungsten oxide particles of the present embodiment.

Another characteristic of the complex tungsten oxide particles or near-infrared ray absorbing particle dispersion product of the present embodiment is that transmittance is unlikely to be changed even when the complex tungsten oxide particles or near-infrared ray absorbing particle dispersion product is left in a high-temperature and high-humidity environment.

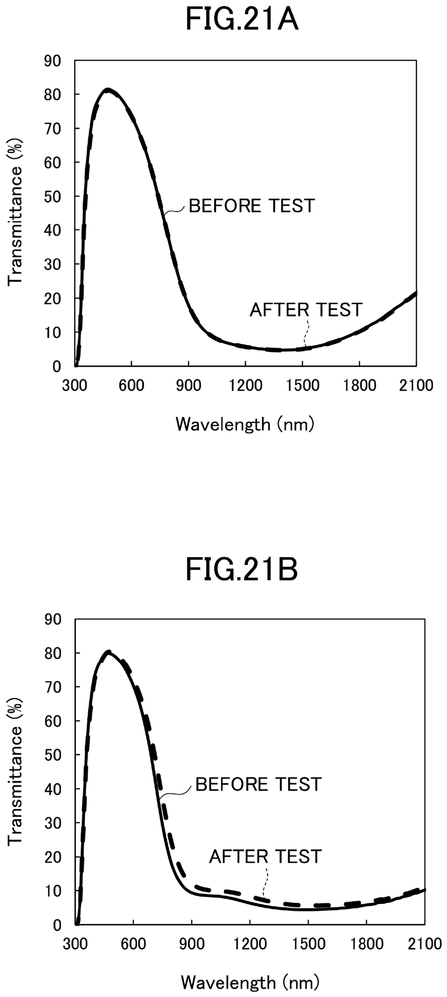

Fig. 21A illustrates a change in transmittance before and after leaving the near-infrared ray absorbing particle dispersion product according to Example 1, which is one example of the complex tungsten oxide particle dispersion product of the present embodiment, in an environment at a temperature of 120°C for 19 days.

Fig. 21B illustrates a change in transmittance before and after leaving the dispersion product, in which the complex tungsten particles according to Comparative Example 1 obtained by synthesizing through known solid-phase synthesis and pulverizing are dispersed in a resin matrix, in an environment at a temperature of 120°C for 19 days.

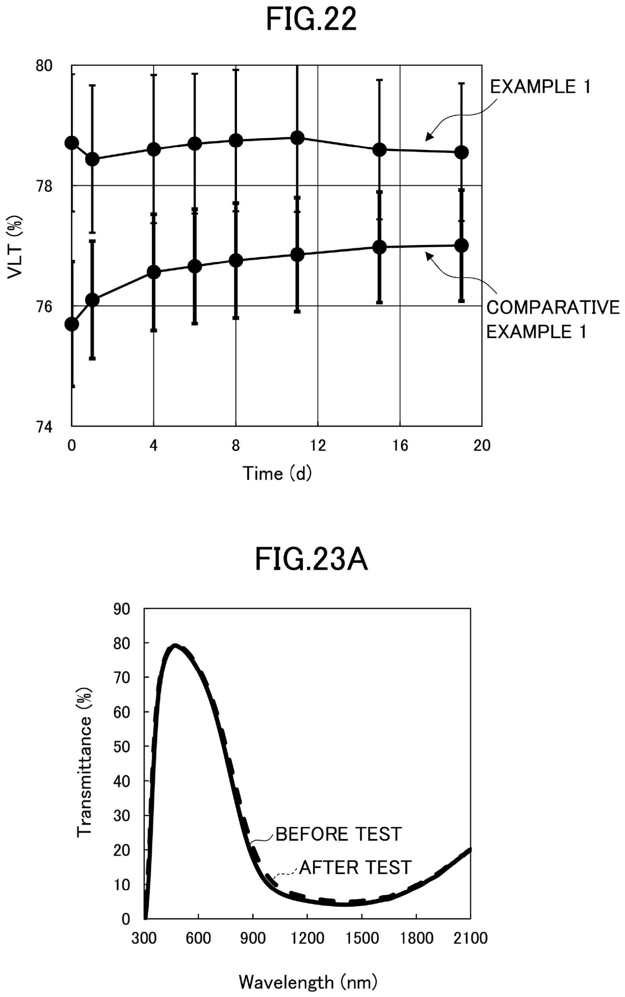

Moreover, Fig. 22 illustrates a relationship between the number of days the near-infrared ray absorbing particle dispersion product according to Example 1, which is one example of the complex tungsten oxide particle dispersion product according to the present embodiment, and the near-infrared ray absorbing particle dispersion product according to Comparative Example 1 are left in an environment at a temperature of 120°C and visible light transmittance (VLT).

The transmittance of the near-infrared ray absorbing particle dispersion product according to Example 1 using the complex tungsten oxide particles of the present embodiment is hardly changed in the environment at a temperature of 120°C, whereas the transmittance of the near-infrared ray absorbing particle dispersion product using the complex tungsten oxide particles of Comparative Example 1 increased in both the visible light region and the infrared ray region. It is assumed that the increase in the transmittance in the environment at the temperature of 120°C is caused by oxidation of the complex tungsten oxide particles. The reason why the transmittance does not increase when the complex tungsten oxide particles of the present embodiment are used is because the complex tungsten oxide particles of the present embodiment include a smaller number of $W^{5+}$ and a smaller number of oxygen vacancies, and therefore there is not much room for further oxidation to progress.

Fig. 23A illustrates a change in transmittance of the near-infrared ray absorbing particle dispersion product according to Example 1, which is one example of the complex tungsten oxide particle dispersion product of the present embodiment, before and after leaving the near-infrared ray absorbing particle dispersion product in an environment at a relative humidity of 90% and a temperature of 85°C for 13 days.

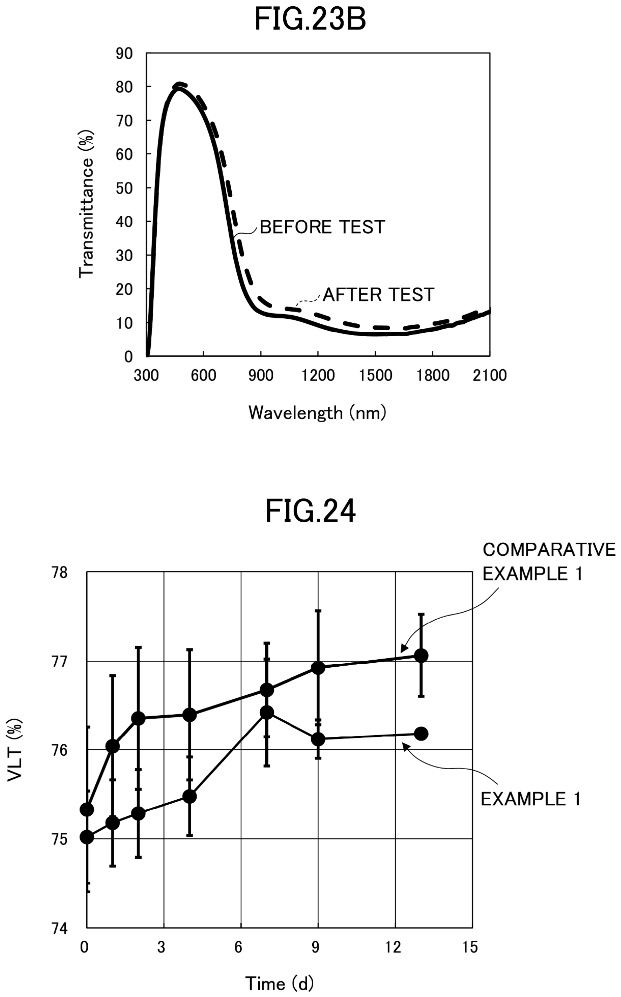

Moreover, Fig. 23B illustrates a change in transmittance of the dispersion product in which the complex tungsten oxide particles according to Comparative Example 1 obtained by synthesizing through known solid-phase synthesis and pulverizing, are dispersed in a resin matrix, before and after leaving dispersion product in an environment at a relative humidity of 90% and a temperature of 85°C for 13 days.

Fig. 24 illustrates a relationship between the number of days the dispersion products of Example 1 and Comparative Example 1 are left in an environment at a relative humidity of 90% and a temperature of 85°C and visible light transmittance (VLT).

It can be confirmed that transmittance of the dispersion product according to Example 1 using the complex tungsten oxide particles of the present embodiment is hardly changed even when the dispersion product is left in an environment at a relative humidity of 90% and a temperature of 85°C. Conversely, it can be confirmed that transmittance of the dispersion product using the complex tungsten oxide particles of Comparative Example 1 is increased in both the visible light region and the infrared ray region.

It is considered that, in the environment at the relative humidity of 90% and the temperature of 85°C, water from the atmosphere enters the dispersion product and causes oxidation, while dissolving $Cs^+$ of the cesium tungsten oxide particles. However, it is assumed that the change in the transmittance of the complex tungsten oxide particles is minimized because the oxidation reaction is not easily progressed in the complex tungsten oxide particles according to Example 1, while allowing water entering the dispersion product to dissolve $Cs^+$.

According to the near-infrared ray absorbing particles of the present embodiment, near-infrared ray absorbing particles having both excellent visible light transparency and excellent infrared ray shielding performance can be provided.

The complex tungsten oxide particles of the present embodiment can be used to form a dispersion liquid in which the complex tungsten oxide particles are dispersed in a solvent, or a dispersion product in which the complex tungsten oxide particles are dispersed in a solid medium. The dispersion liquid or dispersion product can exhibit an excellent infrared ray shielding effect, by which the bottom of the transmittance of the dispersion liquid or dispersion product in the near-infrared ray region can be 5% or less even when the peak of the transmittance of the dispersion liquid or dispersion product in the wavelength range of 500 nm or greater and 600 nm or less is 75% or greater. Further, the dispersion liquid or dispersion product using the complex tungsten oxide particles of the present embodiment can transmit red light at a wavelength of approximately 800 nm, compared with a dispersion liquid of the complex tungsten oxide particles of Comparative Example 1 or the like. Therefore, the complex tungsten oxide particles of the present embodiment can contribute to improvement in a color tone of the dispersion liquid or dispersion product using the complex tungsten oxide particles. Specifically, for example, the transmittance of 50% or greater at the wavelength of 700 nm, and the transmittance of 30% or greater at the wavelength of 800 nm can be achieved. Therefore, by using the complex tungsten oxide particles of the present embodiment, a dispersion liquid or dispersion product, which has a neutral color tone as a color of transmitted light and ensures transparency with respect to light having sensor wavelengths, while suppressing solar transmittance, can be provided.

[Method of producing complex tungsten oxide particles]

An outline of the method of producing the complex tungsten oxide particles of the present embodiment will be described.

Since the above-described complex tungsten oxide particles can be produced by the method of producing the complex tungsten oxide particles of the present embodiment, description of the features, which have already been described, will be omitted. The following description merely describes a configuration example of the method of producing the complex tungsten oxide particles, and a production method for the above-described complex tungsten oxide particles is not limited to the following configuration example.

The method of producing the complex tungsten oxide particles of the present embodiment is desirably a method that can directly synthesize complex tungsten oxide particles having a particle size of 1 $\mu$m or less. If the complex tungsten oxide particles having a particle size of 1 $\mu$m or less are directly synthesized, particles that are less likely to receive damage from pulverization or dispersing, e.g., complex tungsten oxide particles having a particle size of 800 nm or less, can be obtained.

The method of directly synthesizing the complex tungsten oxide particles having a particle size of 1 $\mu$m or less is desirably a production method in which a heat treatment step of supplying an aerosol of raw materials including a M element source and a tungsten element source to an electric furnace, flame, or plasma is carried out to synthesize particles.

Accordingly, the method of producing the complex tungsten oxide particles of the present embodiment can include the following raw material preparation step, aerosol formation step, heat treatment step, and reduction processing step.

In the raw material preparation step, raw materials including a M element source and a tungsten element source can be prepared.

In the aerosol formation step, the raw materials prepared in the raw material preparation step are formed into an aerosol.

In the heat treatment step, a heat treatment of the raw materials formed into the aerosol can be performed in a reaction zone.

In the reduction processing step, reduction processing can be performed on the particles obtained by the heat treatment step in an atmosphere including a reducing gas.

(1) Each of steps

Each of steps of the method of producing the complex tungsten oxide particles of the present embodiment will be described hereinafter.

(1-1) Raw material preparation step

In the raw material preparation step, raw materials including an M element source and a tungsten element source (also referred to as a "W element source" hereinafter) can be prepared.

In the raw material preparation step, raw materials can be blended and prepared so that a ratio of the amount of substance of the M element to the amount of substance of the W element included in the raw materials corresponds to the intended composition of the complex tungsten oxide particles.

The state of the raw materials prepared in the raw material preparation step is not particularly limited. The raw materials may be in the state of a liquid or a powder. Preferably, the raw materials can be formed into an aerosol by spraying or the like. The aerosol refers to a mixture of fine liquid or solid particles and a surrounding gas, where the fine liquid or solid particles are floated in the gas.

In the case where the raw materials are in the form of a liquid, for example, raw materials can be prepared by preparing a solution including the M element source and the W element source.

In addition, a raw material mixture solution serving as raw materials may also be prepared by separately preparing a solution including the M element source and a solution including the W element source in advance, and mixing the both solutions in the raw material preparation step.

For example, the raw materials may be supplied in the form of droplets in the below-described heat treatment step. In this case, the solution including the M element source and the solution including the W element source are mixed immediately before supplying the raw materials to a droplet formation unit (droplet forming device) that forms droplets, or the both solutions are mixed within the droplet formation unit, thereby performing the raw material preparation step. In the droplet formation unit, the below-described aerosol formation step can be performed.

For example, in the case where a problem, such as gelation or the like, occurs when the solution including the M element source and the solution including the W element source are mixed in advance, both solutions are preferably prepared in advance, and mixed immediately before the aerosol formation step, as described above. In the case where the raw material preparation step is performed immediately before the aerosol formation step, a ratio of the amount of substance of the M element to the amount of substance of the W element in the raw materials can be adjusted to a desired range by adjusting the concentrations of the both solutions and the feeding rates of the both solutions to the droplet formation unit.

In the case where the raw material preparation step is performed immediately before the aerosol formation step as described above, the aerosol formation step and the raw material preparation step are not necessarily clearly distinguished from each other, and the both steps can be continuously performed.

In the case where the solution including the M element source and the solution including the W element source are mixed in the raw material preparation step as described above, a specific method of mixing the solutions is not limited to a particular method, and any method can be used.

The W element source is not particularly limited, as long as the W element source is a raw material including tungsten. Examples of the W element source include an elementary substance of tungsten, a tungsten compound, and the like. As the W element source, a salt of tungsten or the like can be used, and for example, tungsten hexacarbonyl is preferably used. The tungsten hexacarbonyl can be represented, for example, by $W(CO)_6$. As the solution including the W element source, an organic solution including a W element source can be suitably used in view of ease of handling or the like.

The M element source is not also limited, as long as the M element source is a raw material including an M element. Examples of the M element source include an elementary substance of the M element, an M element-containing compound, and the like. As the solution including the M element source, for example, a solution including a salt of the M element can be used. The salt of the M element serving as the M element source is not particularly limited. For example, at least one selected from the group consisting of carbonate, acetate, nitrate, hydroxide, and the like of the M element can be used.

As the solution including the M element source, an ethanol solution including an M element source can be suitably used in view of ease of handling or the like.

Even in the case where the M element is cesium, for example, at least one selected from the group consisting of carbonate, acetate, nitrate, hydroxide, and the like can be used as the salt of the M element source, but acetate of the M element source is particularly suitably used. This is because cesium acetate is easily dissolved in ethanol.

A ratio of the M element to 1 mole of the tungsten element in the resultant complex tungsten oxide, i.e., a doped amount of the M element, is determined by a ratio between the W element source and the M element source when a raw material mixture solution is formed. Therefore, the doped amount can be controlled, for example, by a concentration of the solution including the W element source, a concentration of the solution including the M element source, or the like.

The concentration of the W element source in the solution including the W element source, i.e., a concentration of a W element, or the like, is not particularly limited. For example, the tungsten concentration of the solution including the W element source is preferably 0.001 mol/L or greater and 10 mol/L or less, more preferably 0.01 mol/L or greater and 10 mol/L or less, and yet more preferably 0.01 mol/L or greater and 1 mol/L or less. This is because a sufficient yield of tungsten oxide particles per unit time can be obtained by setting the tungsten concentration of the solution including the W element source to 0.001 mol/L or greater so that a sufficient amount of the tungsten oxide particles can be collected, for example, by a filter or the like, and productivity can be improved. In addition, by setting the tungsten concentration of the solution including the W element source to 10 mol/L or less, reprecipitation of the dissolved W element source is inhibited, and aggregation of formed particles is inhibited so that inclusion of coarse complex tungsten oxide particles, for example, having a particle size greater than 1 $\mu$m can be minimized. Further, additives, such as a pH adjusting agent, a surfactant, and the like, can be added to the solution including the W element source.

Moreover, the concentration of the M element source in the solution including the M element source is not particularly limited, and can be selected according to a desired composition of resultant complex tungsten oxide particles, a concentration of the W element source in the solution including the W element source, and the like.

In addition to the solution including the W element source and the solution including the M element source, any suitable ingredients can be added to the raw material mixture solution.

Although the example when the raw materials are liquids has been described above, raw materials may be solids, for example, powders. In the case where raw materials are powders, the raw material can be prepared, for example, by mixing a powder of an M element compound and a powder of a tungsten compound. Alternatively, for example, a tungsten compound powder is added to the solution including the M element source, followed by stirring, and the resultant mixture is dried to remove the solvent to prepare a precursor powder as the raw materials.

In the case where the raw materials are solids, the W element source is not particularly limited. As the W element source, a salt of tungsten or the like can be used, and for example, $H_2WO_4$ or ammonium paratungstate can be preferably used.

The elements in $H_2WO_4$ other than tungsten are hydrogen (H) and oxygen (O), and the elements other than tungsten are discharged from the system in the below-described heat treatment step. Therefore, use of $H_2WO_4$ as the W element source is preferable because complex tungsten oxide particles in which inclusion of impurities is minimized can be obtained.

For example, a powder of an M element-containing salt can be used as the M element source. The M element-containing salt is not particularly limited. For example, at least one selected from the group consisting of carbonate, acetate, nitrate, hydroxide, and the like of the M element can be used.

In the case where the M element is cesium, for example, at least one selected from the group consisting of carbonate, acetate, nitrate, hydroxide, and the like can also be used, but carbonate can be particularly suitably used.

(1-2) Aerosol formation step

In the method of producing the complex tungsten oxide particles of the present embodiment, the raw materials prepared in the raw material preparation step are preferably formed into an aerosol, following supplying the aerosol in the heat treatment step. Specifically, an aerosol is preferably transported by a carrier gas, such as oxygen or the like, and provided to the heat treatment step.

Therefore, the method of producing the complex tungsten oxide particles of the present embodiment can also include an aerosol formation step of forming the raw materials into an aerosol including droplets or particles of the raw materials.

A system or method of forming an aerosol in the aerosol formation step is not particularly limited, and may be appropriately selected according to a state of the raw materials or the like.

In the case where the raw materials are in the liquid state, a liquid serving as the raw materials is sprayed toward a carrier gas using any of various atomizers, such as a centrifugal atomizer, or a two-fluid nozzle to form an aerosol. Alternatively, the liquid may be irradiated with ultrasonic waves to form droplets.

In the case where the raw materials are powders, an aerosol can be formed by a device that creates a dispersion state of the powders serving as the raw materials, and supplying the powders to a gas stream. For example, an aerosol can be formed by an aerosol forming device including a stirring unit, such as a rotating brush, a stirring blade, or the like, and a powder supplying unit including a piston, a screw feeder, or the like that feeds the raw materials to the stirring unit. The granular powders of the raw materials supplied from the powder supply unit are dispersed into particles constituting the powders in the stirring unit, and each of the particles is fed to the carrier gas to generate an aerosol from the powders serving as the raw materials. The stirring unit can preferably select a rotational speed of a stirring blade and can rotate the stirring blade at high speed so that the powders serving as the raw materials can be dispersed into particles.

In the case where droplets dispersed in a gas is formed in the aerosol formation step, a size of the formed droplets is not particularly limited. A diameter of each droplet is preferably 100 $\mu$m or less, more preferably 10 $\mu$m or less, and yet more preferably 5 $\mu$m or less. When the diameter of each droplet is 100 $\mu$m or less, formation of coarse particles of the complex tungsten oxide particles is inhibited, and therefore the complex tungsten oxide particles of nanometer order can be obtained. The lower limit of the size of the droplets formed in the aerosol formation step is not particularly limited. However, it is difficult to form significantly small droplets, which leads to lower productivity. Therefore, the lower limit of the size of the droplets is preferably, for example, 1 $\mu$m or greater.

In the case where solid particles dispersed in a gas are formed in the aerosol formation step, a size of the particles is not particularly limited. A diameter of each particle is preferably 100 $\mu$m or less, more preferably 10 $\mu$m or less, and yet more preferably 3 $\mu$m or less. When the diameter of each particle is 100 $\mu$m or less, a heat treatment can assuredly be performed on the particles including the inner area of each particle. The diameter of each particle can be measured in the same manner as the particle size of the above-described complex tungsten oxide particles.

(1-3) Heat treatment step

In the heat treatment step, the raw materials are subjected to a heat treatment so that the raw materials can be transformed to complex tungsten oxide particles. The heat treatment is not particularly limited, as long as the raw materials can be thermally treated at a temperature of 500°C or higher, and a configuration of a heat source is not particularly limited. Therefore, the heat treatment step can be performed by a method in which the raw materials are guided into a flame using a carrier gas, a method in which the raw materials are guided to a tubular electric furnace using a carrier gas, a method in which the raw materials are guided to a plasma using a carrier gas, or the like. In all of the case of using the flame, the case of using the electric furnace, and the case of using the plasma, a heat treatment temperature can be set to 500°C or higher. Since the heat treatment is performed at 500°C or higher, compounds included in the raw materials are decomposed, and tungsten and the M element react with each other to form complex tungsten oxide.

The complex tungsten oxide particles obtained after the heat treatment step include an appropriate level of W atom defects or heterophases, and therefore the complex tungsten oxide particles, with which dark portions are observed in the Z-contrast of the W atoms, can be obtained after the reduction processing step. Therefore, conditions, such as the heat treatment temperature and the like, can be selected so that the complex tungsten oxide particles obtained after the heat treatment step include an appropriate level of W atom defects or heterophases, and the complex tungsten oxide particles, with which spots of low contrast intensity appear in the Z-contrast of the W atoms, can be obtained after the reduction processing step. Therefore, a pre-test or the like is preferably performed to select a feeding rate of raw materials, a heat treatment temperature, or the like in the heat treatment step so that dark portions appear in the Z-contrast of the W atoms at a desired ratio after the reduction processing step. The conditions, such as the heat treatment temperature and the like are preferably selected so that the heterophases are reduced or removed after the reduction processing step.

The heat treatment temperature is a temperature at which a reaction between the tungsten and the M element can proceed, and therefore the heat treatment temperature may be 500°C or higher, 550°C or higher, and more preferably 1,000°C or higher. The upper limit of the heat treatment temperature is not particularly limited. In view of minimization of energy consumption, the upper limit of the heat treatment temperature is preferably 4,000°C or lower.

In the heat treatment step, a flame can be used as described above, and the heat treatment can be performed on the raw materials using the flame. A particle size of the resultant complex tungsten oxide particles can be selected by using the flame in the heat treatment step, and adjusting the temperature of the reaction zone of the flame.

In the case a liquid of the raw materials is sprayed into a carrier gas to form droplets, and the raw materials in the form of the droplets are introduced into a flame to synthesize complex tungsten oxide particles, the droplets of the raw materials are transported through the flame by the carrier gas, such as an oxygen gas. Once the droplets of the raw materials are transported into the flame, the organic solvent, in which the tungsten source and the M element source serving as the raw materials are dispersed, is burned, and the solvent is decomposed by a combustion reaction. The heat generated by the combustion reaction contributes to a decomposition reaction of tungsten and the M element, and the tungsten and the M element are precipitated in a cooling process at the tail of the flame region.

As described above, the W element source is, for example, tungsten hexacarbonyl or the like, and in the case the M element is cesium, the M element source is, for example, cesium acetate or the like. The above salts are decomposed in the heat treatment step. During the decomposition of the salts, W is likely to be precipitated as $WO_6$, but Cs is unlikely to form oxide as a monomer so that part of Cs is passed through a filter and discharged from the system without being precipitated as a nano-size powder.

In the above case, the tungsten and the M element react with each other during the process of decomposition of the solute, thereby forming complex tungsten oxide.

In the case where a flame is used in the heat treatment step, conditions for forming the flame or the like are not particularly limited. For example, the flame can be formed using a gas mixture including oxygen and hydrocarbon. By forming a flame using a gas mixture including oxygen and hydrocarbon, a flame having a stable temperature can be formed, and complex tungsten oxide particles with a little variation in a particle size or the like can be generated.

A method of adjusting a size of a flame or a temperature of a flame is not particularly limited. For example, the size or temperature of the flame is preferably adjusted by adjusting flow rates of both oxygen and a combustible gas, such as hydrocarbon or the like, in the gas mixture supplied to the flame, while adjusting a flowrate ratio between the oxygen and the combustible gas to the ratio at which combustion of the combustible gas can occur. This is because the heating power can be adjusted with the combustible gas, while securing a sufficient amount of oxygen for combustion.

In the case where a flame is formed using a gas mixture including oxygen and propane, for example, a volume ratio between a flow rate of propane and a flow rate of oxygen (burner) in the gas mixture is preferably such that oxygen is 5 or greater and 8 or less relative to 1 of propane, and the flow rate of propane is in the range of 0.5 L/min or greater and 2 L/min or less. By setting the flow rate of oxygen to 5 or greater relative to 1 of the flow rate of propane, combustion of propane that is a combustible gas can be sufficiently facilitated. However, supply of oxygen is preferably 8 or less relative to 1 of propane so that the supply of oxygen does not become excessive.

The heat treatment temperature of the reaction zone of the flame or the like affects a particle size of the resultant complex tungsten oxide particles.

This is assumed to be because the thermal energy in the reaction zone, such as the flame, is used for sublimation of the generated complex tungsten oxide particles, and the particles are broken away by the sublimation to obtain particles having a fine particle size.

The complex tungsten oxide particles obtained by the heat treatment can be collected, for example, by a filter.

(1-4) Reduction processing step

The particles obtained by the heat treatment step, specifically, the complex tungsten oxide particles, may not exhibit infrared ray absorption ability. Therefore, the inventors of the present invention have conducted studies and found that the complex tungsten oxide particles can exhibit infrared ray absorption ability by further performing a reduction processing step in which reduction processing is performed on the complex tungsten oxide particles obtained by the heat treatment step.

Therefore, the method of producing the complex tungsten oxide particles of the present embodiment may also include a reduction processing step of performing reduction processing on the particles obtained by the heat treatment step in an atmosphere including a reducing gas. Specifically, the method of producing the complex tungsten oxide particles of the present embodiment can include, for example, a reduction processing step in which reduction processing is performed at a temperature in the range of higher than 400°C and lower than 700°C in an atmosphere including a reducing gas after the heat treatment step.

Conditions of the reduction processing are not particularly limited. The conditions of the reduction processing are preferably selected so that a crystal structure does not change before and after the reduction processing step when the complex tungsten oxide particles after reduction processing are analyzed based on an X-ray diffraction pattern, and metals, such as tungsten or the like, are not precipitated. In addition, the conditions of the reduction processing are preferably selected also considering that a dark portion appears at a desired ratio in the Z-contrast of the W atoms of the complex tungsten oxide particles after the reduction processing step.

In the reduction processing step, reduction processing is performed on the complex tungsten oxide particles by increasing and decreasing the temperature in the heat treatment step in a reducing atmosphere including a reducing gas, specifically, performing a heat treatment.

During the reduction processing step, the complex tungsten oxide particles may be stirred or left to stand. The handling of the complex tungsten oxide particles in the reduction processing step can be appropriately selected, but the handling conditions are preferably selected so that the tungsten metal is not precipitated.

The temperature of the reduction processing (reduction processing temperature) is preferably higher than 400°C, more preferably 450°C or higher, and yet more preferably 500°C or higher.

The upper limit of the reduction processing temperature is not particularly limited. For example, the upper limit of the reduction processing temperature is preferably lower than 700°C, more preferably 650°C or lower, and yet more preferably lower than 650°C.

In the case where the raw materials are in the liquid state, a particle size is reduced by reducing a raw material concentration in the aerosol formation step. Since particles having a small particle size are easily reduced, the temperature of the reduction processing step can be lowered. In the reduction processing step, after elevating the temperature from room temperature to the reduction processing temperature, the temperature may be lowered to room temperature again.

The reduction conditions can be determined according to optical characteristics of complex tungsten oxide particles to be obtained.

By setting the reduction processing temperature to be higher than 400°C, reduction processing of the complex tungsten oxide particles can be facilitated, and infrared ray absorption ability is more assuredly imparted. By setting the reduction processing temperature to lower than 700°C, moreover, reduction of the complex tungsten oxide particles to a tungsten metal can be inhibited.

The reducing atmosphere is preferably an atmosphere of a gas mixture including an inert gas, such as argon, and a reducing gas, such as an $H_2$ gas (hydrogen gas) or the like, and the reducing gas is desirably an $H_2$ gas.

In the case where an $H_2$ gas is used as a reducing gas, an amount of the $H_2$ gas in the reducing atmosphere can be appropriately selected. The amount of the $H_2$ gas based on the volume percentage is preferably in the range of 0.1% or greater and 10% or less, and more preferably in the range of 2% or greater and 10% or less. When reduction is performed in an atmosphere including only a reducing gas, close attention should be given because a reduction reaction may excessively proceed to precipitate a tungsten metal.

As the duration of the reduction processing step, the total time from heating to cooling is desirably 30 minutes or longer. The upper limit of the duration of the reduction processing step is not particularly limited. For example, the upper limit is preferably selected by performing a pre-test or the like so that the reduction does not excessively proceed. The total time from heating to cooling refers to a period from when heating is started to increase the temperature from room temperature to when, after the temperature reaches a reduction processing temperature, the temperature is cooled to room temperature. During the above period, the complex tungsten oxide particles are preferably placed in the above-described reducing atmosphere.

By performing the reduction processing step as described above, an unintended heterophase of the complex tungsten oxide particles obtained after the heat treatment step can be transformed into a desired complex tungsten oxide phase.

(2) Apparatus suitably used for method of producing complex tungsten oxide particles

(2-1) Complex material production apparatus

One example of a configuration of a complex material production apparatus that can be suitably used for the method of producing the complex tungsten oxide particles of the present embodiment will be described hereinafter.

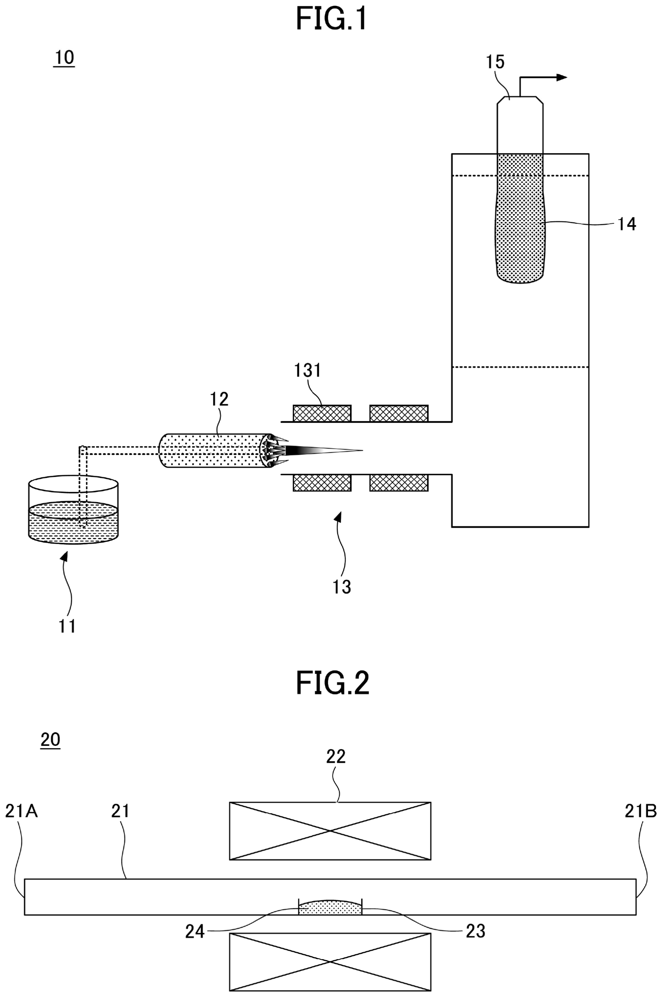

Fig. 1 is a diagram schematically illustrating the complex material production apparatus 10 of the present embodiment.
The complex material production apparatus 10 includes a reservoir 11 charged with a solution serving as raw materials, a two-fluid nozzle 12 that forms droplets of the raw materials and also forms a flame, and a reaction tube 13 coupled to a filter 14 that collects the formed complex tungsten oxide particles. Although the solution serving as the raw materials has already been described, examples of the solution include a solution including an M element source and a W element source.
The solution of the raw materials and a carrier gas are supplied to the two-fluid nozzle 12 to form an aerosol (aerosol formation step). For example, oxygen and hydrocarbon are supplied to the two-fluid nozzle 12, and in addition, a reaction zone of a flame is formed. The formed aerosol is supplied into the flame to perform a heat treatment (heat treatment step). A piping 131 for cooling water is disposed around the reaction tube 13, and the cooling water is circulated through the piping 131. The complex tungsten oxide particles introduced into the reaction tube 13 are collected by a filter 14, such as a bag filter or the like.
Moreover, an ejector 15 for adjusting a feeding rate of the carrier gas may be provided at the further downstream position.
The configuration example of the complex material apparatus that forms droplets of the raw materials and performs a heat treatment using a flame to form complex tungsten oxide particles has been described above. However, the configuration of the apparatus is not limited to the above embodiment. The raw materials may be powders or the like, and a heat source used for the heat treatment may be an electric furnace or the like.

(2-2) Reduction processing device

In the reduction processing device, the above-described reduction processing step can be performed.
The reduction processing device is not particularly limited as long as the reduction processing device is configured to be able to perform the above-described reduction processing step. For example, the reduction processing device includes a container, which accommodates the complex tungsten oxide particles that are particles obtained by the above-described complex material production apparatus, a gas piping, which supplies a gas mixture constituting a reducing atmosphere in the container, and a heat source, which heats the container.
It is also possible to introduce a gas mixture constituting a reducing atmosphere into the container and draw the gas mixture out from the container, and place the complex tungsten oxide particles serving as a processing target under a stream of the gas mixture. In this case, a supply pipe and an exhaust pipe for the gas mixture may be provided as the gas piping to form the above gas stream.
Moreover, a stirring blade for stirring the complex tungsten oxide particles in the container may be used in combination.
Fig. 2 is a diagram schematically illustrating one configuration example of the reduction processing device, and illustrates a cross-sectional view cut along a plane passing through a center axis of a reaction tube of the reduction processing device 20.
The reduction processing device 20 is a horizontal tubular furnace. The reduction processing device 20 can be used by attaching a gas inlet pipe, which is not illustrated, to one port 21A of the reaction tube 21, and attaching a gas exhaust pipe, which is not illustrated, to the other port 21B of the reaction tube 21. A gas mixture constituting a reducing atmosphere is supplied from the one port 21A side to create a reducing atmosphere in the reaction tube 21.
A heater 22 may be provided in the vicinity of the reaction tube 21. The complex tungsten oxide particles are placed in a ceramic container 23, such as a boat or the like, and the container 23 is disposed inside the reaction tube 21, which is a tubular furnace, at a position corresponding to the heater 22.
By creating a reducing atmosphere in the reaction tube 21 using the reduction processing device 20 and heating at a desired temperature by the heater 22, reduction processing can be performed on the complex tungsten oxide particles 24 placed in the container 23.

[Near-infrared ray absorbing particle dispersion liquid]

Next, one configuration example of the near-infrared ray absorbing particle dispersion liquid of the present embodiment will be described.

The near-infrared ray absorbing particle dispersion liquid of the present embodiment can include near-infrared ray absorbing particles and a liquid medium. As the near-infrared ray absorbing particles, the above-described complex tungsten oxide particles can be used.

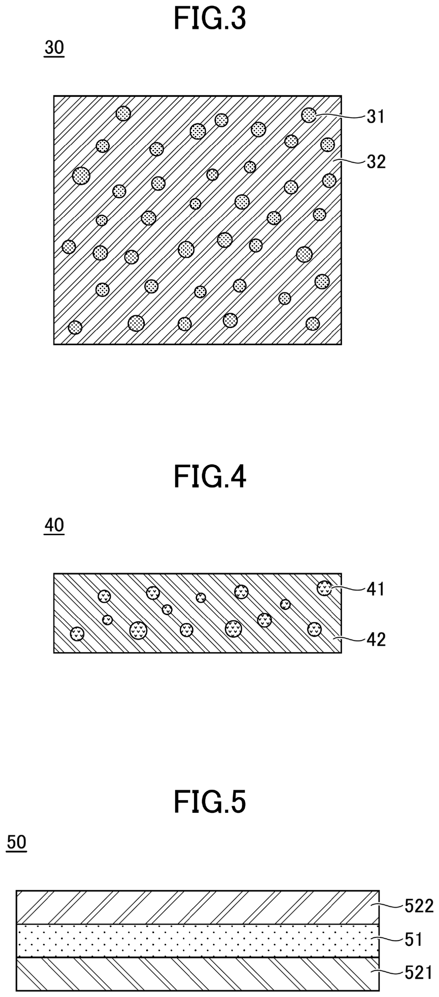

As the liquid medium, for example, at least one selected from the group consisting of water, organic solvents, oils and fats, liquid resins, and liquid plasticizers can be used. Specifically, for example as illustrated in Fig. 3, the near-infrared ray absorbing particle dispersion liquid 30 of the present embodiment can include the near-infrared ray absorbing particles 31 and the liquid medium 32. The near-infrared ray absorbing particle dispersion liquid preferably has a structure in which the near-infrared ray absorbing particles are dispersed in the liquid medium.

Fig. 3 is a schematically illustrated diagram, and the near-infrared ray absorbing particle dispersion liquid of the present embodiment is not limited to the embodiment illustrated in Fig. 3. For example, in Fig. 3, the near-infrared ray absorbing particles 31 are represented by circles, and illustrated as spherical particles. However, shapes of the near-infrared ray absorbing particles 31, which are the above-described complex tungsten oxide particles, are not limited to the above embodiment, and can be any shapes. For example, surface coating or the like may be provided to the near-infrared ray absorbing particles 31. The near-infrared ray absorbing particle dispersion liquid 30 may include, as well as the near-infrared ray absorbing particles 31 and liquid medium 32, other additives as necessary.

As the liquid medium, at least one selected from the group consisting of water, organic solvents, oils and fats, liquid resins, and liquid plasticizers can be used as described above.

As the organic solvents, various organic solvents, such as alcohol-based solvents, ketone-based solvents, ester-based solvents, hydrocarbon-based solvents, glycol-based solvents, and the like can be selected. Examples of the organic solvents include at least one selected from the group consisting of: alcohol-based solvents, such as isopropyl alcohol, methanol, ethanol, 1-propanol, butanol, pentanol, benzyl alcohol, diacetone alcohol, 1-methoxy-2-propanol, and the like; ketone-based solvents, such as acetone, methyl ethyl ketone, methyl propyl ketone, methyl isobutyl ketone, cyclohexanone, isophorone, and the like; ester-based solvent, such as 3-methyl-methoxy-propionate, n-butyl acetate, and the like; glycol derivatives, such as ethylene glycol monomethyl ether, ethylene glycol monoethyl ether, ethylene glycol isopropyl ether, propylene glycol monoethyl ether, propylene glycol methyl ether acetate, propylene glycol ethyl ether acetate; amides, such as formamide, N-methylformamide, dimethylformamide, dimethylacetamide, N-methyl-2-pyrrolidone, and the like; aromatic hydrocarbons, such as toluene, xylene, and the like; and halogenated hydrocarbons, such as ethylene chloride, chlorobenzene, and the like.

Among the above solvents, organic solvents having low polarity are preferable. In particular, isopropyl alcohol, ethanol, 1-methoxy-2-propanol, acetone, methyl ethyl ketone, methyl isobutyl ketone, toluene, propylene glycol monomethyl ether acetate, n-butyl acetate are more preferable. One of the above organic solvents may be used alone, or two or more the above organic solvents may be used in combination.

As the oils and fats, for example, at least one selected from the group consisting of: drying oils, such as linseed oil, sunflower oil, tung oil, and the like; semidrying oils, such as sesame seed oil, cotton seed oil, rapeseed oil, soy bean oil, rice bran oil, and the like; nondrying oils, such as olive oil, coconut oil, palm oil, dehydrated castor oil, and the like; fatty acid monoesters obtained through a direct esterification reaction between fatty acid of vegetable oil and monoalcohol; ethers; and petroleum-based solvents, such as Isopar (registered trademark) E, Exxsol (registered trademark) Hexane, Heptane, E, D30, D40, D60, D80, D95, D110, D130 (all manufactured by Exxon Mobil Corporation), and the like, may be used.

As the liquid resins, for example, at least one selected from the group consisting of liquid acrylic resins, liquid epoxy resins, liquid polyester resins, liquid urethane resins, and the like can be used.

As the liquid plasticizers, for example, liquid plasticizers for plastics and the like can be used.

The constituent components included in the near-infrared ray absorbing particle dispersion liquid are not limited to only the above-described near-infrared ray absorbing particles and liquid medium. Optional components may be added to and included in the near-infrared ray absorbing particle dispersion liquid as necessary.

For example, an acid or alkali is added to the near-infrared ray absorbing particle dispersion liquid as necessary to adjust the pH of the dispersion liquid.

In addition, various surfactants, coupling agents, and the like can be added as dispersants to the near-infrared ray absorbing particle dispersion liquid in order to further improve dispersion stability of the near-infrared ray absorbing particles in the above-described near-infrared ray absorbing particle dispersion liquid and avoid an increase in a dispersed particle diameter due to reaggregation.

The dispersants, such as surfactants, coupling agents, or the like, can be selected according to the intended use. The dispersant is preferably a surfactant including at least one functional group selected from the group consisting of an amino group, a hydroxyl group, a carboxyl group, and an epoxy group. The above functional groups are adsorbed on surfaces of the near-infrared ray absorbing particles to inhibit aggregation of the near-infrared ray absorbing particles, and exhibit an effect of homogeneously dispersing the near-infrared ray absorbing particles in an infrared ray shielding film formed using the near-infrared ray absorbing particles. The dispersant is desirably a polymer-based dispersant including at least one functional group selected from the above functional groups (the group consisting of the above functional groups).

A commercially available dispersant, which is suitably used, is at least one selected from the group consisting of: Solsperse (registered trademark) 9000, 12000, 17000, 20000, 21000, 24000, 26000, 27000, 28000, 32000, 35100, 54000, and 250 (manufactured by Japan Lubrizol Corporation); EFKA (registered trademark) 4008, 4009, 4010, 4015, 4046, 4047, 4060, 4080, 7462, 4020, 4050, 4055, 4400, 4401, 4402, 4403, 4300, 4320, 4330, 4340, 6220, 6225, 6700, 6780, 6782, and 8503 (manufactured by Efka Additives B.Y.); Ajisper (registered trademark) PA111, PB821, PB822, PN411, and Famex L-12 (manufactured by Ajinomoto Fine-Techno Co., Inc.); Disper BYK (registered trademark) 101, 102, 106, 108, 111, 116, 130, 140, 142, 145, 161, 162, 163, 164, 166, 167, 168, 170, 171, 174, 180, 182, 192, 193, 2000, 2001, 2020, 2025, 2050, 2070, 2155, 2164, 220S, 300, 306, 320, 322, 325, 330, 340, 350, 377, 378, 380N, 410, 425, and 430 (manufactured by Byk Chemie Japan Co., Ltd.); Disparlon (registered trademark) 1751N, 1831, 1850, 1860, 1934, DA-400N, DA-703-50, DA-725, DA-705, DA-7301, DN-900, NS-5210, and NVI-8514L (manufactured by Kusumoto Chemicals, Ltd.); ALFON (registered trademark) UC-3000 , UF-5022, UG-4010, UG-4035, and UG-4070 (manufactured by Toagosei Co., Ltd.); and the like.

A method of dispersing the near-infrared ray absorbing particles in the liquid medium is not particularly limited, as long as the method enables to disperse the near-infrared ray absorbing particles in the liquid medium. In the above method, the near-infrared ray absorbing particles are preferably dispersed to achieve the average particle diameter of 800 nm or less, more preferably dispersed to achieve the average particle diameter of 1 nm or greater and 800 nm or less.

Examples of the method of dispersing the near-infrared ray absorbing particles in the liquid medium include a dispersion method using a device, such as a bead mill, a ball mill, a sand mill, a paint shaker, an ultrasonic homogenizer, or the like. Among the above methods, pulverization and dispersing using a media stirring mill, such as a bead mill, a ball mill, a sand mill, a paint shaker, or the like with a medium (beads, balls, or Ottawa sand) are preferable because a time required to achieve a desired average particle diameter can be shortened. By performing pulverization and dispersing using the media stirring mill, the particle size of the near-infrared ray absorbing particles can be reduced by collision among the near-infrared ray absorbing particles, collision against the medium, or the like, simultaneously with dispersion of the near-infrared ray absorbing particles in the liquid medium so that the near-infrared ray absorbing particles can be dispersed while further reducing the particle size. In other words, pulverization-dispersion processing can be performed.

The average particle diameter of the near-infrared ray absorbing particles is preferably 1 nm or greater and 800 nm or less as described above. This is because scattering of light in the visible light region, which includes a wavelength of 400 nm or longer and 780 nm or shorter, due to geometric scattering or Mie scattering, can be reduced when the average particle diameter is small. Moreover, for example, the near-infrared ray absorbing particle dispersion product, in which the near-infrared ray absorbing particles are dispersed in a resin or the like, obtained using the near-infrared ray absorbing particle dispersion liquid of the present embodiment is inhibited from behaving like frosted glass and losing clear transparency. Specifically, when the average particle diameter of the near-infrared ray absorbing particles is 200 nm or less, the mode of the geometric scattering or Mie scattering becomes weak, and light scattering becomes the Rayleigh scattering mode. In the Rayleigh scattering mode, an amount of light scattered by the particles is proportional to the sixth power of the diameters of the dispersed particles, and therefore the scattering is reduced as the average particle diameter is reduced, thereby improving transparency. The average particle diameter is preferably 100 nm or less, as scattered light is significantly reduced. The average particle diameter is more preferably 30 nm or less.

As the dispersed state of the near-infrared ray absorbing particles in the near-infrared ray absorbing particle dispersion product, in which the near-infrared ray absorbing particles are dispersed in a solid medium, such as a resin or the like, obtained using the near-infrared ray absorbing particle dispersion liquid of the present embodiment, the near-infrared ray absorbing particles are not aggregated beyond the average particle diameter of the near-infrared ray absorbing particles in the dispersion liquid, as long as the dispersion liquid is added to the solid medium by a method known in the related art.

Moreover, when the average particle diameter of the near-infrared ray absorbing particles is 1 nm or greater and 800 nm or less, transparency of a produced near-infrared ray absorbing particle dispersion product or a molded article (a plate, a sheet, etc.) of the near-infrared ray absorbing particle dispersion product can be particularly enhanced.

An amount of the near-infrared ray absorbing particles in the near-infrared ray absorbing particle dispersion liquid of the present embodiment is not particularly limited. For example, the amount of the near-infrared ray absorbing particles is preferably 0.01 percent by mass or greater and 80 percent by mass or less. This is because satisfactory solar transmittance is achieved, i.e., the solar transmittance is sufficiently inhibited, when the amount of the near-infrared ray absorbing particles is 0.01 percent by mass or greater. In addition, when the amount of the near-infrared ray absorbing particles is 80 percent by mass or less, the near-infrared ray absorbing particles can be homogeneously dispersed in a dispersion medium.

According to the near-infrared ray absorbing particle dispersion liquid of the present embodiment, a near-infrared ray absorbing particle dispersion liquid having excellent visible light transparency and an infrared ray shielding performance is obtained because the near-infrared ray absorbing particle dispersion liquid includes the above-described complex tungsten oxide particles. According to the near-infrared ray absorbing particle dispersion liquid of the present embodiment, moreover, the near-infrared ray absorbing particle dispersion liquid can exhibit an excellent infrared ray shielding effect, with which the bottom of the transmittance in the near-infrared ray region becomes 5% or less even when the peak of the transmittance in the wavelength range of 500 nm or greater and 600 nm or less is 75% or greater. According to the near-infrared ray absorbing particle dispersion liquid of the present embodiment, furthermore, the transmittance of 50% or greater at the wavelength of 700 nm, and the transmittance of 30% or greater at the wavelength of 800 nm can be achieved. According to the near-infrared ray absorbing particle dispersion liquid of the present embodiment, therefore, transmitted light has a neutral color tone, and transparency with respect to light of sensor wavelengths can be secured, while reducing the solar transmittance.

[Near-infrared ray absorbing particle dispersion product]

Next, one configuration example of the near-infrared ray absorbing particle dispersion product of the present embodiment will be described.

The near-infrared ray absorbing particle dispersion product of the present embodiment includes near-infrared ray absorbing particles and a solid medium. As the near-infrared ray absorbing particles, the above-described complex tungsten oxide particles can be used. Specifically, for example, the near-infrared ray absorbing particle dispersion product 40 can includes the near-infrared ray absorbing particles 41, which are the above-described complex tungsten oxide particles, and the solid medium 42, where the near-infrared ray absorbing particles 41 can be arranged in the solid medium 42, as schematically illustrated in Fig. 4. In the near-infrared ray absorbing particle dispersion product of the present embodiment, the near-infrared ray absorbing particles are preferably dispersed in the solid medium. Fig. 4 is a schematically illustrated diagram, and the near-infrared ray absorbing particle dispersion product of the present embodiment is not limited to the embodiment illustrated in Fig. 4. For example, in Fig. 4, the near-infrared ray absorbing particles 41 are represented by circles, and illustrated as spherical particles. However, shapes of the near-infrared ray absorbing particles 41 are not limited to the above embodiment, and can be any shapes. For example, surface coating or the like may be provided to the near-infrared ray absorbing particles 41. The near-infrared ray absorbing particle dispersion product 40 may include, as well as the near-infrared ray absorbing particles 41 and the solid medium 42, other additives as necessary.

The near-infrared ray absorbing particle dispersion product of the present embodiment will be described hereinafter in the order of (1) properties of the solid medium and the near-infrared ray absorbing particle dispersion product, (2) a method of producing the near-infrared ray absorbing particle dispersion product, (3) additives, and (4) application examples.

(1) Properties of the solid medium and the near-infrared ray absorbing particle dispersion product

Examples of the solid medium include medium resins, such as thermoplastic resins, thermoset resins, UV curable resins, and the like. Specifically, a resin is suitably used as the solid medium.

A specific material of the resin used as the solid medium is not particularly limited. For example, the material is preferably at least one resin or a mixture of two or more resins selected from the group consisting of polyester resins, polycarbonate resins, acrylic resins, styrene resins, polyamide resins, polyethylene resins, vinyl chloride resins, olefin resins, epoxy resins, polyimide resins, fluororesins, ethylene-vinyl acetate copolymers, polyvinyl acetal resins, and UV curable resins. As the polyester resins, polyethylene terephthalate resins can be suitably used.

The above medium resins may include a polymer-based dispersant including at least one functional group selected from the group consisting of an amino group, a hydroxyl group, a carboxyl group, and an epoxy group in a main skeleton of a molecular structure.

The solid medium is not limited to the medium resin. As the solid medium, a binder using metal alkoxide can also be used. Typical examples of the metal alkoxide include alkoxides of Si, Ti, Al, Zr, and the like. It is also possible to produce a near-infrared ray absorbing particle dispersion product, in which the solid medium includes an oxide, by heating the binder using the above metal alkoxide to perform hydrolysis and polycondensation of the binder.

The near-infrared ray absorbing particle content of the near-infrared ray absorbing particle dispersion product according to the present embodiment is not particularly limited. The near-infrared ray absorbing particle dispersion product preferably includes the near-infrared ray absorbing particles in the amount of 0.001 percent by mass or greater and 80 percent by mass or less.

The shape of the near-infrared ray absorbing particle dispersion product of the present embodiment is not also limited. The near-infrared ray absorbing particle dispersion product of the present embodiment preferably has a sheet shape, a board shape, or a film shape. This is because the near-infrared ray absorbing particle dispersion product can be used in various applications by forming the near-infrared ray absorbing particle dispersion product into a sheet shape, a board shape, or a film shape.

According to the near-infrared ray absorbing particle dispersion product of the present embodiment, a near-infrared ray absorbing particle dispersion product having excellent visible light transparency and an infrared ray shielding performance is obtained because the near-infrared ray absorbing particle dispersion product includes the above-described complex tungsten oxide particles. According to the near-infrared ray absorbing particle dispersion product of the present embodiment, moreover, the near-infrared ray absorbing particle dispersion product can exhibit an excellent infrared ray shielding effect, with which the bottom of the transmittance in the near-infrared ray region becomes 5% or less even when the peak of the transmittance in the wavelength range of 500 nm or greater and 600 nm or less is 75% or greater. According to the near-infrared ray absorbing particle dispersion product of the present embodiment, furthermore, the transmittance of 50% or greater at the wavelength of 700 nm, and the transmittance of 30% or greater at the wavelength of 800 nm can be achieved. According to the near-infrared ray absorbing particle dispersion product of the present embodiment, therefore, transmitted light has a neutral color tone, and transparency with respect to light of sensor wavelengths can be secured, while reducing the solar transmittance.

(2) Method of producing the near-infrared ray absorbing particle dispersion product

The method of producing the near-infrared ray absorbing particle dispersion product of the present embodiment will be described hereinafter. The following description merely demonstrates a configuration example of the method of producing the near-infrared ray absorbing particle dispersion product, and the method of producing the above-described near-infrared ray absorbing particle dispersion product is not limited to the following configuration example.

The near-infrared ray absorbing particle dispersion product of the present embodiment can be produced, for example, using a master batch. In this case, the method of producing the near-infrared ray absorbing particle dispersion product of the present embodiment can include, for example, the following master batch production step.

In the master batch production step, a master batch in which the near-infrared ray absorbing particles are dispersed in the solid medium can be produced.

A specific method of producing the master batch is not particularly limited. For example, the near-infrared ray absorbing particle dispersion liquid or the near-infrared ray absorbing particles are dispersed in the solid medium, and the resultant solid medium is pelletized, thereby producing a master batch.

As the near-infrared ray absorbing particles, a near-infrared ray absorbing particle dispersion powder obtained by removing the liquid medium from the near-infrared ray absorbing particle dispersion liquid can also be used.

For example, the near-infrared ray absorbing particle dispersion liquid, the near-infrared ray absorbing particles, or the near-infrared ray absorbing particle dispersion powder is homogeneously mixed with a powder or pellets of the solid medium and optional other additives, thereby preparing a mixture. The mixture is kneaded by a vented single-screw or twin-screw extruder, and the melt-extruded strand is cut into pellets, thereby producing a master batch. In this case, examples of the shapes of the pellets include cylindrical shapes, prismatic shapes, and the like. When the pellets are produced, what is known as a hot cut method in which the melt-extruded product is directly cut can be employed. In this case, the pellets generally have shapes close to spheres.

In the case where the near-infrared ray absorbing particle dispersion liquid is used as a raw material in the master batch production step, the liquid medium derived from the near-infrared ray absorbing particle dispersion liquid is preferably reduced or removed. In this case, the removal amount of the liquid medium included in the near-infrared ray absorbing particle dispersion liquid is not particularly limited. For example, the liquid medium is preferably removed from the near-infrared ray absorbing particle dispersion liquid until a residual amount of the liquid medium reaches a tolerable amount of the liquid medium to be included in the master batch. In the case where a liquid plasticizer is used as the liquid medium, the entire amount of the liquid plasticizer may remain in the near-infrared ray absorbing particle dispersion product.

A method of reducing or removing the liquid medium, which has been originally included in the near-infrared ray-absorbing particle dispersion liquid, from the near-infrared ray absorbing particle dispersion liquid or the mixture of the near-infrared ray absorbing particle dispersion liquid and the solid medium is not particularly limited. For example, a drying step in which the near-infrared ray absorbing particle dispersion liquid or the like is vacuum-dried is preferably performed. Specifically, the near-infrared ray absorbing particle dispersion liquid or the like is vacuum-dried while being stirred to separate the dispersion liquid or the like into a near-infrared ray absorbing particle-containing composition and a liquid medium component. Examples of a device used for vacuum drying include a vacuum stirring drier, but the device is not particularly limited as long as the device can have the above functions. Moreover, the pressure value at the time of vacuum drying in the drying step is appropriately selected.

By using the vacuum-drying method, the efficiency of removing the liquid medium or the like derived from the near-infrared ray absorbing particle dispersion liquid is improved. Since the near-infrared ray absorbing particle dispersion powder obtained after vacuum drying and the near-infrared ray absorbing particle dispersion liquid serving as a raw material are not exposed at a high temperature for a long time, aggregations of the near-infrared ray absorbing particle dispersion powder or the near-infrared ray absorbing particles dispersed in the near-infrared ray absorbing particle dispersion liquid do not occur. Therefore, vacuum drying is preferable. In addition, the productivity of the near-infrared ray absorbing particle dispersion powder is also increased, the evaporated solvent, such as the liquid medium or the like, can be easily collected, and therefore vacuum drying is preferable in view of environmental friendliness.

The solvent component having a boiling point of 120°C or lower is preferably sufficiently removed from the near-infrared ray absorbing particle dispersion powder obtained after the drying step. For example, a residual amount of the solvent component is preferably 2.5 percent by mass or less. If the residual solvent component is in the amount of 2.5 percent by mass or less, air cells are not formed when the near-infrared ray absorbing particle powder or the like is processed to form the near-infrared ray absorbing particle dispersion product, and therefore desired appearance or optical characteristics are maintained. When the solvent component remaining in the near-infrared ray absorbing particle dispersion particle is 2.5 percent by mass or less, aggregation due to natural drying of the residual solvent component does not occur, and a long-term stability can be maintained when the near-infrared ray absorbing particle dispersion powder is stored for a long period.

The dispersion concentration of the obtained master batch can be adjusted by adding the solid medium, and kneading together, while maintaining the dispersed state of the near-infrared ray absorbing particles included in the master batch, which is the near-infrared ray absorbing particle dispersion product.

In addition, the method of producing the near-infrared ray absorbing particle dispersion product of the present embodiment may include a molding step as necessary. In the molding step, the obtained master batch, or the above-described mixture obtained by adding the solid medium to the master batch is molded to form the near-infrared ray absorbing particle dispersion product into a desired shape.

A specific method of molding the near-infrared ray absorbing particle dispersion product is not particularly limited. For example, a method known in the related art, such as extrusion molding, injection molding, or the like can be used.

In the molding step, the near-infrared ray absorbing particle dispersion product having a sheet shape, a board shape, or a film shape, which is formed into a flat shape or curved shape, can be produced. A method of molding the near-infrared ray absorbing particle dispersion product into a sheet shape, a board shape, or a film shape is not particularly limited, and various methods known in the related art can be used. For example, roll calendaring, extrusion molding, casting, inflation molding, or the like can be used.

The method of producing the near-infrared ray absorbing particle dispersion product of the present embodiment is not limited to the embodiment including the above master batch production step.

For example, the method of producing the near-infrared ray absorbing particle dispersion product of the present embodiment may be configured to include the following steps.

A precursor liquid preparation step, in which a monomer or oligomer of a solid medium, or a liquid solid medium precursor in a uncured state is mixed with the near-infrared ray absorbing particles, the near-infrared ray absorbing particle dispersion powder, or the near-infrared ray absorbing particle dispersion liquid, thereby preparing a precursor liquid of a near-infrared ray absorbing particle dispersion product.

A near-infrared ray absorbing particle dispersion product production step, in which a solid medium precursor, such as the monomer, is cured by a chemical reaction, such as condensation, polymerization, or the like, thereby producing a near-infrared ray absorbing particle dispersion product.

In the case where an acrylic resin is used as the solid medium, for example, an acrylic monomer or an acryl-based UV curable resin is mixed with the near-infrared ray absorbing particles, thereby obtaining a precursor liquid of a near-infrared ray absorbing particle dispersion product.

Subsequently, a predetermined mold is filled with the precursor liquid of the near-infrared ray absorbing particle dispersion product, and radical polymerization of the precursor liquid is performed, thereby obtaining a near-infrared ray absorbing particle dispersion product using the acrylic resin.

Similarly to the case where the above-described acrylic resin is used, in the case where a resin cured by crosslinking is used as the solid medium, a crosslinking reaction of the precursor liquid of the near-infrared ray absorbing particle dispersion product is performed, thereby obtaining a near-infrared ray absorbing particle dispersion product.

(3) Additives

In the case where a resin is used as the solid medium, the near-infrared ray absorbing particle dispersion product of the present embodiment can also include known additive agents (additives), such as plasticizers, flame retardants, coloring inhibitors, fillers, or the like, that are known to be added to resins. Nevertheless, the solid medium is not limited to a resin, and a binder using a metal alkoxide can also be used, as described above.

The shape of the near-infrared ray absorbing particle dispersion product according to the present embodiment is not particularly limited, and the near-infrared ray absorbing particle dispersion product can be formed into, for example, a sheet shape, a board shape, or a film shape, as described above.

In the case where the near-infrared ray absorbing particle dispersion product having a sheet shape, a board shape, or a film shape is used as an intermediate layer of transparent substrates, such as laminated glass, the solid medium included in the near-infrared ray absorbing particle dispersion product may not have sufficient flexibility or adhesion to the transparent substrate, if the solid medium is used as it is. In this case, the near-infrared ray absorbing particle dispersion product preferably includes a plasticizer. Specifically, for example, in the case where the solid medium is a polyvinyl acetal resin and the near-infrared ray absorbing particle dispersion product is used for the above application, the near-infrared ray absorbing particle dispersion product preferably further includes a plasticizer.

As the above-described plasticizer, any material used as a plasticizer in the solid medium for the near-infrared ray absorbing particle dispersion product of the present embodiment can be used. Examples of the plasticizer used for the near-infrared ray absorbing particle dispersion product, in which a polyvinyl acetal resin constitutes the solid medium, include: a plasticizer that is a compound including a monohydric alcohol and an organic acid ester; an ester-based plasticizer such as a polyhydric alcohol organic acid ester compound and the like; and a phosphoric acid-based plasticizer, such as an organic phosphoric acid-based plasticizer, and the like. The above plasticizers are preferably in a liquid state at room temperature. Among the above plasticizers, a plasticizer that is an ester compound synthesized from a polyhydric alcohol and a fatty acid is preferable.

(4) Application examples

The near-infrared ray absorbing particle dispersion product of the present embodiment can be used in various forms, and use and application forms of the near-infrared ray absorbing particle dispersion product are not particularly limited. As application examples of the near-infrared ray absorbing particle dispersion product of the present embodiment, an intermediate film for absorbing near-infrared rays, a near-infrared ray absorbing laminate, and a near-infrared ray absorbing transparent substrate will be described hereinafter.

(4-1) Intermediate film for absorbing near-infrared rays and near-infrared ray absorbing laminate

The near-infrared ray absorbing laminate of the present embodiment can have a laminate structure including the above-described near-infrared ray absorbing particle dispersion product and transparent substrates. The near-infrared ray absorbing laminate of the present embodiment includes, as constituent components, the above-described near-infrared ray absorbing particle dispersion product and transparent substrates, and is a laminate in which the near-infrared ray absorbing particle dispersion product and the transparent substrates are laminated.

Examples of the near-infrared ray absorbing laminate include a laminate, in which two or more transparent substrates and the above-described near-infrared ray absorbing particle dispersion product are laminated. In this case, the near-infrared ray absorbing particle dispersion product is disposed, for example, between the transparent substrates and can be used as a near-infrared ray absorbing intermediate film.

In this case, specifically, the near-infrared ray absorbing laminate 50 can include multiple transparent substrates 521 and 522, and the near-infrared ray absorbing particle dispersion product 51 as illustrated in Fig. 5 that is a schematic cross-sectional view cut along the laminating direction of the transparent substrates and the near-infrared ray absorbing particle dispersion product. In addition, the near-infrared ray absorbing particle dispersion product 51 can be disposed between the multiple transparent substrates 521 and 522. Fig. 5 illustrates an example where two transparent substrates 521 and 522 are included, but the near-infrared ray absorbing laminate is not limited to such an embodiment.

The near-infrared ray absorbing particle dispersion product that is used as the near-infrared ray absorbing intermediate film preferably has a sheet shape, a board shape, or a film shape.

As the transparent substrate, at least one selected from the group consisting of a glass plate, a plate-shaped plastic, and a film-shaped plastic, which are transparent in the visible light region, can be suitably used.

In the case where a plastic is used as the transparent substrate, a material of the plastic is not particularly limited, and can be selected according to the intended use. For example, as the material of the plastic, at least one selected from the group consisting of polycarbonate resins, acrylic resins, polyester resins, polyamide resins, vinyl chloride resins, olefin resins, epoxy resins, polyimide resins, ionomer resins, fluororesins, and the like can be used. As the polyester resin, a polyethylene terephthalate resin can be suitably used.

The transparent substrate may include particles having a solar radiation shielding function. As the particles having the solar radiation shielding function, near-infrared ray absorbing particles having near-infrared ray shielding ability can be used.

By interposing the above-described near-infrared ray absorbing particle dispersion product as a constituent member of an intermediate layer disposed between multiple transparent substrates, a solar radiation shielding laminate that is one type of near-infrared ray absorbing laminates having excellent visible light transparency and infrared ray shielding performance can be obtained. Moreover, the above-described near-infrared ray absorbing particle dispersion product can achieve the transmittance of 50% or greater at a wavelength of 700 nm and the transmittance of 30% or greater at a wavelength of 800 nm even when a peak of the transmittance in the wavelength range of 500 nm or longer and 600 nm or shorter is 75% or greater. Thus, a solar radiation laminate that is a type of the near-infrared ray absorbing laminate with which transmitted light has a neutral color tone, and transparency with respect to light of sensor wavelengths can be secured, while reducing the solar transmittance can be obtained.

The above-described near-infrared ray absorbing laminate can also be obtained by bonding and integrating multiple transparent substrates with the near-infrared ray absorbing particle dispersion product being interposed between the transparent substrates according to a method known in the related art.

In the case where the above-described near-infrared ray absorbing particle dispersion product is used as a near-infrared ray absorbing intermediate film, as the solid medium, the solid medium described in the near-infrared ray absorbing particle dispersion product can be used. However, the solid medium is preferably a polyvinyl acetal resin in view of enhanced adhesion strength between the near-infrared ray absorbing intermediate film and the transparent substrate.

The near-infrared ray absorbing intermediate film of the present embodiment can be produced by the above-described method of producing the near-infrared ray absorbing particle dispersion product. For example, a near-infrared ray absorbing intermediate film having any shape of a sheet shape, a board shape, or a film shape can be obtained.

In the case where the near-infrared ray absorbing intermediate film does not have a sufficient flexibility nor sufficient adhesion to the transparent substrate, a liquid plasticizer for a medium resin is preferably added. In the case where the medium resin used in the near-infrared ray absorbing intermediate film is a polyvinyl acetal resin, for example, addition of a liquid plasticizer for the polyvinyl acetal resin is beneficial for improving adhesion to the transparent substrate.

As the plasticizer, substances used as plasticizers for a resin as the sodium medium can be used. Examples of the plasticizer used for the near-infrared ray absorbing particle dispersion product, in which a polyvinyl acetal resin is used as the solid medium include: plasticizers that are compounds including a monohydric alcohol and organic acid ester; ester-based plasticizers, such as polyhydric alcohol organic acid ester compounds, and the like; and phosphoric acid-based plasticizers, such as organic phosphoric acid-based plasticizers and the like. The above plasticizers are preferably in the liquid state at room temperature. Among the above plasticizers, a plasticizer that is a ester compound synthesized from a polyhydric alcohol and a fatty acid is preferable.

In addition, at least one selected from the group consisting of a silane coupling agent, a metal salt of carboxylic acid, hydroxide of a metal, and carbonate of a metal can also be added to the near-infrared ray absorbing intermediate film. A metal constituting the metal salt of carboxylic acid, hydroxide of the metal, or carbonate of the metal is not particularly limited, but the metal is preferably at least one selected from the group consisting of sodium, potassium, magnesium, calcium, manganese, cesium, lithium, rubidium, and zinc. An amount of at least one selected from the group consisting of the metal salt of carboxylic acid, hydroxide of the metal, and carbonate of the metal in the near-infrared ray absorbing intermediate film is preferably 1 percent by mass or greater and 100 percent by mass or less relative to the near-infrared ray absorbing particles.

Further, the near-infrared ray absorbing intermediate film can include at least one type of particles selected from the group consisting of oxide particles, composite oxide particles, and boride particles all of which include at least two elements selected from the group consisting of Sb, V, Nb, Ta, W, Zr, F, Zn, Al, Ti, Pb, Ga, Re, Ru, P, Ge, In, Sn, La, Ce, Pr, Nd, Gd, Tb, Dy, Ho, Y, Sm, Eu, Er, Tm, Tb, Lu, Sr, and Ca, as necessary, in addition to the near-infrared ray absorbing particles. In the case where a sum of the above particles and the near-infrared ray absorbing particles is 100 percent by mass, the near-infrared ray absorbing intermediate film can include the above particles in the amount of 5 percent by mass or greater and 95 percent by mass or less.

At least one layer of intermediate films disposed between the transparent substrates in the near-infrared ray absorbing laminate may include a UV absorber. Examples of the UV absorber include at least one selected from the group consisting of a compound having a malonic acid ester structure, a compound having an oxalic acid anilide structure, a compound having a benzotriazole structure, a compound having a benzophenone structure, a compound having a triazine structure, a compound having a benzoate structure, a compound having a hindered amine structure, and the like.

Certainly, intermediate layers of the near-infrared ray absorbing laminate may be composed of the near-infrared ray absorbing intermediate films of the present embodiment.

The near-infrared ray absorbing intermediate film that has been described above is one embodiment of the near-infrared ray absorbing particle dispersion product. It is needless to say that the near-infrared ray absorbing particle dispersion product according to the present embodiment can be used without being interposed between two or more transparent substrates that transmit visible light. Specifically, the near-infrared ray absorbing particle dispersion product according to the present embodiment alone can constitute and be established as a near-infrared ray absorbing particle dispersion product.

The near-infrared ray absorbing laminate according to the present embodiment is not limited to the above-described embodiment in which the near-infrared ray absorbing particle dispersion product is disposed between the transparent substrates, and may have any configuration as long as the near-infrared absorbing laminate has a laminate structure including the near-infrared ray absorbing particle dispersion product and the transparent substrate.

(4-2) Near-infrared ray absorbing transparent substrate

The near-infrared ray absorbing transparent substrate of the present embodiment includes a transparent substrate, and a near-infrared ray absorbing layer disposed on at least one surface of the transparent substrate, and the above-described near-infrared ray absorbing particle dispersion product can be used as the near-infrared ray absorbing layer.

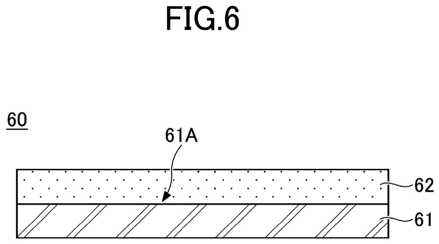

Specifically, the near-infrared ray absorbing transparent substrate 60 can include a transparent substrate 61 and a near-infrared ray absorbing layer 62 as illustrated in Fig. 6 that is a schematic cross-sectional view cut along a laminating direction of the transparent substrate and the near-infrared ray absorbing layer. The near-infrared ray absorbing layer 62 can be disposed on at least one surface 61A of the transparent substrate 61.

As described above, the near-infrared ray absorbing transparent substrate of the present embodiment can include the transparent substrate. As the transparent substrate, for example, at least one selected from the group consisting of transparent film substrates and transparent glass substrates is preferably used.

The film substrate is not limited to a film shape, and may have, for example, a board shape or a sheet shape. As a material of the film substrate, at least one selected from the group consisting of polyester resins, acrylic resins, urethane resins, polycarbonate resins, polyethylene resins, ethylene-vinyl acetate copolymers, vinyl chloride resins, fluororesins, and the like can be suitably used, and can be used according to various purpose. Nevertheless, the material of the film substrate is preferably a polyester resin, and particularly preferably a polyethylene terephthalate resin (PET resin). Specifically, the film substrate is preferably a polyester resin, and more preferably a polyethylene terephthalate resin.

In the case where the film substrate is used as the transparent substrate, a surface of the film substrate is preferably subjected to a surface treatment in order to facilitate adhesion to the near-infrared ray absorbing layer.

In addition, a preferable embodiment for improving adhesion between the glass substrate or film substrate and the near-infrared ray absorbing layer is an embodiment in which an intermediate layer is formed on the glass substrate or film substrate, and the near-infrared ray absorbing layer is formed on the intermediate layer. A configuration of the intermediate layer is not particularly limited. For example, the intermediate layer can be configured by a polymer film, a metal layer, an inorganic layer (e.g., an inorganic oxide layer of silica, titania, zirconia, or the like), an organic/inorganic composite layer, or the like.

Since the near-infrared ray absorbing particle dispersion product has already been described, redundant description will be omitted here. A shape of the near-infrared ray absorbing particle dispersion product is not particularly limited. For example, the near-infrared ray absorbing particle dispersion product preferably has a sheet shape, a board shape, or a film shape.

A method of producing the near-infrared ray absorbing transparent substrate of the present embodiment will be described.

The near-infrared ray absorbing transparent substrate of the present embodiment can be produced, for example, by forming a near-infrared ray absorbing layer on a transparent substrate using the above-described near-infrared ray absorbing particle dispersion liquid. The near-infrared ray absorbing layer is the near-infrared ray absorbing particle dispersion product, in which the near-infrared ray absorbing particles are dispersed in the solid medium.

Therefore, a method of producing the near-infrared ray absorbing transparent substrate of the present embodiment can include, for example, the following coating step and the following near-infrared ray absorbing layer formation step.

In the coating step, a surface of a transparent substrate is coated with a coating liquid including the above-described near-infrared ray absorbing particle dispersion liquid.

In the near-infrared ray absorbing layer formation step, the liquid medium in the coating liquid is evaporated, thereby forming a near-infrared ray absorbing layer.

The coating liquid used in the coating step can be produced, for example, by adding a solid medium, such as a resin, metal alkoxide, or the like, or a solid medium precursor to the above-described near-infrared ray absorbing particle dispersion liquid, and mixing.

The solid medium precursor refers to at least one selected from the group consisting of a monomer of a solid medium, an oligomer of a solid medium, and a solid medium that is uncured and in the liquid state, as described above.

When the near-infrared ray absorbing layer, which is a coating film, is formed on the transparent substrate, the near-infrared ray absorbing layer is in the state in which the near-infrared ray absorbing particles are dispersed in the solid medium. Therefore, the near-infrared ray absorbing layer is the near-infrared ray absorbing particle dispersion product. As described above, the near-infrared ray absorbing transparent substrate can be produced only by providing the near-infrared ray absorbing particle dispersion product on the surface of the transparent substrate.

The solid medium and the solid medium precursor are as described in (1) Properties of solid medium and near-infrared ray absorbing particle dispersion product, and (2) Method of producing near-infrared ray absorbing particle dispersion product, thus redundant description will be omitted here.

A method of applying the coating liquid to the transparent substrate for providing the near-infrared ray absorbing layer on the transparent substrate is not particularly limited, as long as the method is capable of uniformly coating the transparent substrate with the coating liquid. Examples of the method include bar coating, gravure coating, spray coating, dip coating, spin coating, screen printing, roll coating, flow casting, and the like.

Hereinafter, a process of producing a near-infrared ray absorbing layer on a surface of a transparent substrate will be described through an example in which a UV curable resin is used as a solid medium, and a coating liquid is applied by bar coating to form a near-infrared ray absorbing layer.

The coating liquid whose concentration and additives are appropriately adjusted to achieve appropriate leveling is applied onto the transparent substrate using a wire bar having a bar number that can satisfy an appropriate thickness of the near-infrared ray absorbing layer and an appropriate amount of the near-infrared ray absorbing particles. After drying the solvent, such as the liquid medium or the like, included in the coating liquid to remove the solvent, UV rays are applied to cure the solid medium, thereby forming a coating layer, which is the near-infrared ray absorbing layer, on the transparent substrate.

The drying conditions of the coating film vary depending on constituent components, and the type or amount of the solvent. In general, drying can be performed under the conditions at the temperature of 60°C or higher and 140°C or lower, and for the duration of 20 seconds or longer and 10 minutes or shorter. The UV irradiation is not particularly limited. For example, an UV exposure device, such as an ultra-high pressure mercury lamp, can be suitably used.

In addition, the adhesion between the substrate and the near-infrared ray absorbing layer, smoothness of the coating film during coating, drying of the organic solvent, and the like can be controlled by steps before and after (pre-steps and post-steps) formation of the near-infrared ray absorbing layer. Examples of the pre-steps and the post-steps include a surface treatment step of the substrate, a pre-baking (preheating of the substrate) step, a post-baking (post-heating of the substrate) steps, and the like. The pre-steps and the post-steps can be appropriately selected. In the pre-baking step or the post-baking step, the heating temperature is preferably 80°C or higher and 200°C or lower, and the heating time is preferably 30 seconds or longer and 240 seconds or shorter.

The method of producing the near-infrared ray absorbing transparent substrate of the present embodiment is not limited to the above-described method. As another configuration example of the method of producing the near-infrared ray absorbing transparent substrate of the present embodiment, the following embodiment that includes a near-infrared ray absorbing particle dispersion liquid coating and drying step, and a binder coating and curing step is also exemplified.

In the near-infrared ray absorbing particle dispersion liquid coating and drying step, a surface of a transparent substrate is coated with the above-described near-infrared ray absorbing particle dispersion liquid, and the applied near-infrared ray absorbing particle dispersion liquid is dried.

In the binder coating and curing step, a binder including a solid medium, such as a resin, a metal alkoxide, or the like, or a solid medium precursor is applied onto the surface where the near-infrared ray absorbing particle dispersion liquid is applied, and the binder is cured.

In this case, the film in which the near-infrared ray absorbing particles are dispersed is formed on the surface of the transparent substrate by the near-infrared ray absorbing particle dispersion liquid coating and drying step. The coating of the near-infrared ray absorbing particle dispersion liquid can be performed in the same method as the method described in the coating step of the above-described method of producing the near-infrared ray absorbing transparent substrate.

Then, the binder is applied onto the film in which the near-infrared ray absorbing particles are dispersed, and the binder is cured. Thus, the cured binder is disposed between the near-infrared ray absorbing particles, thereby forming a near-infrared ray absorbing layer.

The near-infrared ray absorbing transparent substrate may further include a coating layer provided on the near-infrared ray absorbing particle dispersion product. Specifically, the near-infrared ray absorbing transparent substrate may include a multilayer film.

The coating layer is, for example, a coating film of an oxide including at least one selected from the group consisting of Si, Ti, Zr, and Al. In this case, the coating layer can be formed, for example, by coating the near-infrared ray absorbing layer with a coating liquid including at least one selected from the group consisting of alkoxide including one or more of Si, Ti, Zr, or Al, and a partially hydrolyzed polycondensation product of the alkoxide, and drying the coating liquid.

By providing the coating layer, the coating component fills gaps between the deposited near-infrared ray absorbing particles, which constitutes a first layer, to form a film, thereby inhibiting refraction of visible light. Thus, the haze value of the film is further reduced, and visible light transmittance can be improved. In addition, the adhesion of the near-infrared ray absorbing particles to the substrate can be improved.

A method of forming the coating film formed of the alkoxide including one or more of Si, Ti, Zr, or Al, or the partially hydrolyzed polycondensation product of the alkoxide on the near-infrared ray absorbing particles alone, or on the film including the near-infrared ray absorbing particles is preferably a coating method in view of easy operation and a cost of film formation.

As the coating liquid used in the coating method, a coating liquid in which at least one selected from the group consisting of alkoxide including one or more of Si, Ti, Zr, or Al and a partially hydrolyzed polycondensation product of the alkoxide is included in a solvent, such as water, alcohol, or the like is suitably used. An amount of the alkoxide in the coating liquid is not particularly limited. For example, the amount of the alkoxide, which is determined as a conversion value of the oxide in the coating obtained after heating, is preferably 40 percent by mass or less. Moreover, the pH may be adjusted by adding an acid or an alkali, as necessary.

By applying the coating liquid as a second layer on the film including the near-infrared ray absorbing particles as a main component, and heating the coating liquid, an oxide film including at least one selected from the group consisting of Si, Ti, Zr, and Al, which is the coating layer, is easily formed. As a binder component used in the coating liquid, or a constituent component of the coating liquid, an organosilazane solution is preferably used.

The heating temperature of the substrate after applying the near-infrared ray absorbing particle dispersion liquid or coating liquid including the metal alkoxide of one or more of Si, Ti, Zr, or Al, or the hydrolyzed polycondensation product of the metal alkoxide is not particularly limited. For example, the heating temperature of the substrate is preferably 100°C or higher, and more preferably equal to or higher than a boiling point of the solvent in the coating liquid, such as the near-infrared ray absorbing particle dispersion liquid or the like.

This is because, when the heating temperature of the substrate is 100°C or higher, a polymerization reaction of the metal alkoxide or the hydrolyzed polycondensation product of the metal alkoxide included in the coating film can be completed. In addition, when the heating temperature of the substrate is 100°C or higher, water or an organic solvent serving as a solvent is unlikely to remain in the film. Thus, the solvent does not cause reduction in visible light transmittance of the film obtained after heating.

The thickness of the near-infrared ray absorbing layer on the transparent substrate in the near-infrared ray absorbing transparent substrate of the present embodiment is not particularly limited. The thickness of the near-infrared ray absorbing layer is preferably 10 $\mu$m or less, and more preferably 6 $\mu$m or less in practice. This is because, when the thickness of the near-infrared ray absorbing layer is 10 $\mu$m or less, the near-infrared ray absorbing layer has abrasion resistance with sufficient pencil hardness, and can avoid process abnormalities, such as occurrences of warpage of the substrate film or the like when the solvent is evaporated and the binder is cured in the near-infrared ray absorbing layer.

Examples

The description will be given through specific examples hereinafter, but the present invention is not limited to these examples.

(1) Evaluation methods

(1-1) Powder X-ray diffraction pattern

A powder X-ray diffraction pattern (XRD pattern) of the complex tungsten oxide particles was measured by a powder X-ray diffraction spectrometer (BRUKER D2 PHASER). The powder X-ray diffraction pattern was measured using CuK$\alpha$ rays as a radiation source, at a tube voltage of 45 kV, and a tube current of 40 mA.

(1-2) Observation of STEM image and HAADF image

The obtained complex tungsten oxide particles were observed using a transmission electron microscope. A high-angle angular dark-field (HAADF) image of the complex tungsten oxide particles was also observed using STEM (model type: JEM-ARM200F) manufactured by JEOL Ltd. The atomic number (Z) contrast in the HAADF image is proportional to the square of the atomic numbers of atoms included in the particle and the number of the atoms. Since the brighter contrast is exhibited as heavier atoms are stacked more, it is assumed that the brightest contrast and the second brightest contrast correspond to W, the third brightest contrast corresponds to Cs, and O cannot be confirmed.

A sample was observed by placing the sample on a Cu mesh provided with a support membrane by a dispersion method.

During the observation, a high-angle annular dark-field image (STEM-HAADF) was acquired at an acceleration voltage of 200 kV. The present observation image is an image obtained by detecting only transmitted electrons at a large scattering angles among electrons transmitted through the sample, and a contrast reflecting a difference in the composition can be obtained in the observation image as described above. The value of the scattering angle is proportional to the square of an atomic number (Z), and therefore an element having a larger atomic number appears brighter in the contrast. In the case of the complex tungsten oxide particles prepared in Example and Comparative Example, Cs and W can be distinguished by the difference observed in the contrast.

For the evaluation, the difference in the contrast intensity at the tungsten column (W volume) that was a spot (point) where the tungsten was disposed was used in the STEM-HAADF image for distinguishing a W defect site and a non-defective portion. If W is vacant, the maximum value of the Z-contrast is reduced at the spot.

The evaluation and observation of the contrast of the observed STEM-HAADF image were performed by Digital Micrograph (Version 3.43.3213.0) manufactured by Gatan, Inc. The observation data was read by the software, and the contrast of the corresponding field was extracted by a line profiling function.

In order to inhibit deterioration caused by the electron beam, the particles in the size of 50 nm or greater were selected from the dispersed complex tungsten oxide particles for the STEM-HAADF image. The size of the particles used for selecting the observed particles was determined as a diameter of the minimum covering circle that could capture the particle inside. Then, the observation can be performed by setting the observation field size to a 20 nm-side square or larger and a 50 nm-side square or smaller in order to clearly identify the Z-contrast of the W atoms.

A crystal structure of the hexagonal $Cs_{0.33}WO_3$ that is a Cs-W-O compound having a hexagonal structure in the [001] incident direction, specifically at the (001) plane is depicted in Fig. 7. W/W arrays 701 in which only W atoms 71 are aligned, and W/Cs arrays 702 in which W atoms 71 and Cs atoms that are the M element 73 are alternately aligned are arranged. In Fig. 7, the region S surrounded by the both arrows respectively indicating the a-axis length and the b-axis length is a unit cell. There are W columns and Cs columns in the c-axis direction that is perpendicular to the paper surface, and there are three W columns and one Cs column in the region S.

For calculation of the number ratio of the dark portions in the Z-contrast of tungsten atoms in the STEM-HAADF image, first, the number of the W columns in the observation field was counted with reference to the crystal structure illustrated in Fig. 7.

Subsequently, the maximum value of the Z-contrast at the spot of each W column in the observed field of view was calculated using the software, and the average value of the Z-contrast was determined. Moreover, the number of dark portions, which were spots in which the maximum value of the contrast at the respective spots of the W columns in the observed field of view were 95% or less of the average value was counted.

Then, the ratio of the dark portions in the observation field relative to the number of the W columns in the observation field was determined.

(1-3) Transmitted light profile

As optical characteristics of the near-infrared ray absorbing particle dispersion liquid, a transmitted light profile was measured at an interval of 5 nm in the wavelength range of 200 nm or longer and 2,600 nm or shorter using a spectrophotometer (U-4100, manufactured by Hitachi, Ltd.).

(1-4) Composition analysis

A ratio of each constituent component included in the complex tungsten oxide particles was evaluated by the following method.

The mass ratio of Cs was determined as an arithmetic mean of three values per sample measured by a Polarized Zeeman atomic absorption spectroscopy (AAS, model type: ZA3300, manufactured by Hitachi High-Tech Corporation).

The mass ratio of W was determined as an arithmetic mean of three analysis values per sample obtained by inductively-coupled plasma optical emission spectroscopy (ICP-OES, model type: ICPE-9800, manufactured by Shimadzu Corporation).

The mass ratio of O was determined as an arithmetic mean of three analysis values per sample obtained by an oxygen/nitrogen/hydrogen analyzer (ON-836, LECO Japan Corp.,) using an infrared ray detector (infrared absorption spectroscopy (IRS)) for oxygen detection.

[Example 1]

(1) Production of complex tungsten oxide particles and near-infrared ray absorbing particle dispersion liquid

Complex tungsten oxide particles were produced using the complex material production apparatus 10 illustrated in Fig. 1, and the reduction processing device illustrated in Fig. 2, and were evaluated. Specific conditions will be described hereinafter.

The complex material production apparatus 10 includes the reservoir 11 in which the solution including the W element source and the M element source, which is a solution serving as raw materials, is accommodated, the two-fluid nozzle 12 that forms droplets of the raw materials and forms a flame, and the reaction tube 13 coupled with the filter 14 that collects the formed complex tungsten oxide particles.

The feeding rate of the raw material solution to the two-fluid nozzle 12 was set to 3 g/min. In addition, the flow rate of oxygen that was a carrier gas was controlled by the ejector 15 and was set to 15 L/min. The air flow rate in the ejector 15 was controlled to be within the range of 160 L/min to 180 L/min.

For formation of a flame by the two-fluid nozzle 12, a propane gas and an oxygen gas were used, the flow rate of the propane gas was set to 1.2 L/min, and the flow rate of the oxygen gas was set to 6.0 L/min.

As the raw materials, a solution mixture of a solution in which $W(CO)_6$ serving as the W element source was dissolved in tetrahydrofuran (THF) (the solution including the W element source), and a solution in which cesium acetate serving as the M element source was dissolved in ethanol (the solution including the M element source) was used, and was accommodated in the reservoir 11. The solution mixture serving as the raw materials was prepared so that Cs/W was 0.37 where Cs/W was a ratio of the amount of substance (Cs) of Cs, which was the included as M element, to the amount of substance (W) of the tungsten element.

The raw material solution and oxygen serving as the carrier gas were supplied from the reservoir 11 to the two-fluid nozzle 12 to form an aerosol (aerosol formation step).

As described above, the propane gas and the oxygen gas were supplied to the two-fluid nozzle 12 to create a reaction zone of a flame, and the formed aerosol was supplied into the flame to perform a heat treatment (heat treatment step).

In the heat treatment step, conditions of the heat treatment were selected so that an appropriate level of W atom defects and heterophases were formed in the complex tungsten oxide particles obtained after the heat treatment step, and the complex tungsten oxide particles, with which spots of low contrast intensity were observed in the Z-contrast of the W atoms, were obtained after the reduction treatment step. Specifically, the heat treatment conditions were selected according to the results of the tests conducted in advance. In the heat treatment step, the heat treatment was performed on the raw material at the temperature of 550°C or higher.

The complex tungsten oxide particles obtained at the heat treatment step were introduced into the reaction tube 13. The piping 131 for cooling water was disposed in the surrounding area of the reaction tube 13, and the cooling water was circulated through the piping 131. The complex tungsten oxide particles introduced into the reaction tube 13 were collected by the filter 14 that was a bag filter.

The XRD pattern of the complex tungsten oxide particles obtained after the heat treatment step was evaluated.

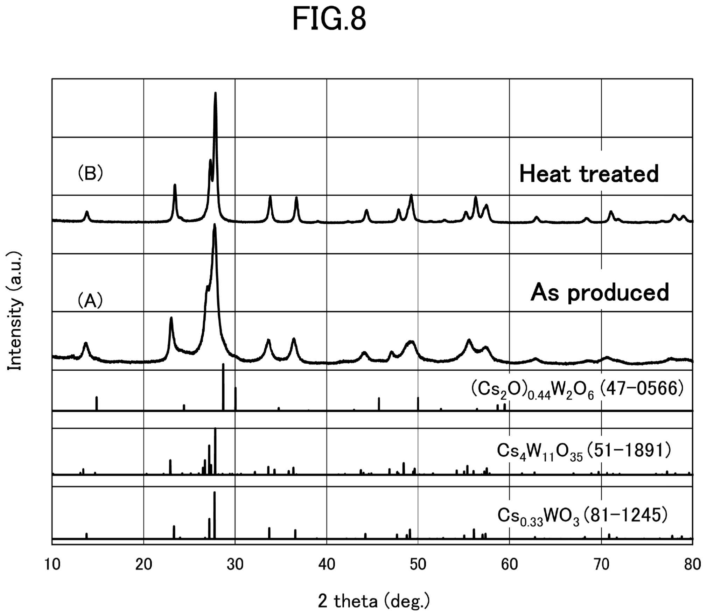

Fig. 8 illustrates the XRD pattern of the obtained complex tungsten oxide particles. In Fig. 8, the XRD pattern (A) indicated as "As produced" is the XRD pattern of the complex tungsten oxide particles after the heat treatment step. The complex tungsten oxide particles were determined as a crystal phase composed of hexagonal $Cs_{0.33}WO_3$ (ICDD:81-1245) or orthorhombic $Cs_4W_{11}O_{35}$ (ICDD: 51-1891), and a small amount of a cubic pyrochlore $(Cs_2O)_{0.44}W_2O_6$ (ICDD:47-0566). For the determination of the small amount of the crystal phase, Rietveld analysis was used.

Further, reduction processing was performed using the reduction processing device 20 illustrated in Fig. 2.

As illustrated in Fig. 2, the heater 22 was disposed in the surrounding area of the reaction tube 21, and the temperature was increased from room temperature to 500°C under a gas stream of 3 vol. % $H_2$/97 vol.% Ar, after the temperature of the portion where the container 23 was placed reached a reduction processing temperature, and the temperature was maintained for 2 hours, followed by cooling to room temperature, thereby performing reduction processing (reduction processing step). Thus, reduced particles, which were the complex tungsten oxide particles of Example 1, were obtained.

Fig. 8 illustrates the XRD pattern of the obtained complex tungsten oxide particles. In Fig. 8, the XRD pattern (B) indicated as "Heat treated" is the XRD pattern of the complex tungsten oxide particles after the reduction processing step. The obtained XRD pattern only included the diffraction peak of $Cs_{0.33}WO_3$, and therefore the crystal system was confirmed to be hexagonal.

The above-described composition analysis of the complex tungsten oxide particles after the reduction processing step according to Example 1 was performed to determine the Cs/W ratio that was a ratio of the amount of substance of cesium to the amount of substance of tungsten. As a result, it was confirmed that the Cs/W ratio was reduced from 0.37, which was the Cs/W ratio in the charged composition, to 0.34. However, the value of 0.34 is 0.01 greater than the theoretical composition ratio of 0.33, and the XRD pattern indicates a single phase. Therefore, it is assumed that there were almost no Cs defects.

In addition, when the composition analysis of the complex tungsten oxide particles was performed, it was confirmed that the O/W ratio, which was a ratio of the amount of substance of oxygen to the amount of substance of tungsten, was 2.841. In the following description, the complex tungsten oxide particles will be described as $Cs_{0.33}WO_3$ in accordance with the evaluation by the XRD pattern.

Twenty-three percent by mass of the complex tungsten oxide particles after the reduction processing step according to Example 1, 8 percent by mass of an acrylic polymer dispersant including an amino group as a functional group (amine value: 48 mgKOH/g) (referred to as the "dispersant a" hereinafter), and 69 percent by mass of butyl acetate were weighed. The weighed materials were placed in a paint shaker together with zirconia beads having a diameter of 0.05 mm, and dispersion processing was performed using the paint shaker for 100 minutes, thereby obtaining a $Cs_{0.33}WO_3$ particle dispersion liquid as a near-infrared ray absorbing particle dispersion liquid according to Example 1.

The average particle diameter (length measured by a transmission electron microscope) of the complex tungsten oxide particles in the obtained dispersion liquid according to Example 1 was measured, and the measured average particle diameter was 27.2 nm.

The average particle diameter of the complex tungsten oxide particles was calculated by observing three fields of view by the transmission electron microscope. Specifically, images of the complex tungsten oxide particles in a total number of 600 or greater and 700 or less were observed in the three fields of view, and an area of each particle was calculated from the binarized data, and a circle-equivalent diameter of each particle was calculated. Then, the arithmetic mean of the particle diameters, i.e., the circle-equivalent diameters, of all of the evaluated complex tungsten oxide particles was determined as the average particle diameter.

A fraction of the $Cs_{0.33}WO_3$ particle dispersion liquid according to Example 1 was collected, and the solvent was removed, thereby obtaining $Cs_{0.33}WO_3$ particles as complex tungsten oxide particles according to Example 1.

STEM-HAADF images of the $Cs_{0.33}WO_3$ particle, which are the complex tungsten oxide particles according to Example 1, are exhibited in Figs. 9A and 9B. Fig. 9A illustrates an STEM-HAADF image of a whole particle. Moreover, Fig. 9B illustrates an enlarged view of a square region 91 of the particle illustrated in Fig. 9A. As illustrated in Fig. 9B, the size of the observed field of view was adjusted to be approximately a 20 nm-side square. Approximately 15 dark portions, which were spots with the low Z-contrast of the W atoms, were observed within the observed particle. Since three tungsten columns are present in each unit cell, the number of the tungsten columns in the observed field of view is calculated to be 2,249 from the size of the unit cell, and the size of the field of view. Specifically, the W defect is present in 0.67% of the columns based on the number ratio.

The dark portion, which was the portion of a low contrast, was determined as a spot in which the maximum value of the Z-contrast of the spots as the tungsten columns was reduced to be 95% or less of the average value.

Figs. 10A to 10F illustrates line profiles of the STEM-HAADF image of the complex tungsten oxide particle of Example 1 including W defects. Figs. 10A to 10F correspond to line profiles at the lines L1 to L6 in Fig. 9B, respectively.

Even within the same line, the Z-contrast may vary depending on factors such as the thickness of the particle, the inclination with respect to the electron beam, or the like. Therefore, the Z-contrast intensity of the W atoms in a bulk region without any W defect was determined by averaging the maximum values of the Z-contrast at the spots in all of the tungsten columns in the field of view. Using the average value of the maximum values of the Z-contrast of the spots in all of the tungsten columns in the field of view as a reference, a site where the maximum value of the contrast of the spot of the tungsten column was 95% or less relative to the average value was determined as a W defect site.

At the ling L1 depicted in Fig. 10A, the maximum value of the Z-contrast at the point P1 was reduced to 89.1% with respect to the average value, and the maximum value of the Z-contrast at the point P2 was reduced to 88.4% with respect to the average value. Thus, the point P1 and the point P2 were W defect sites.

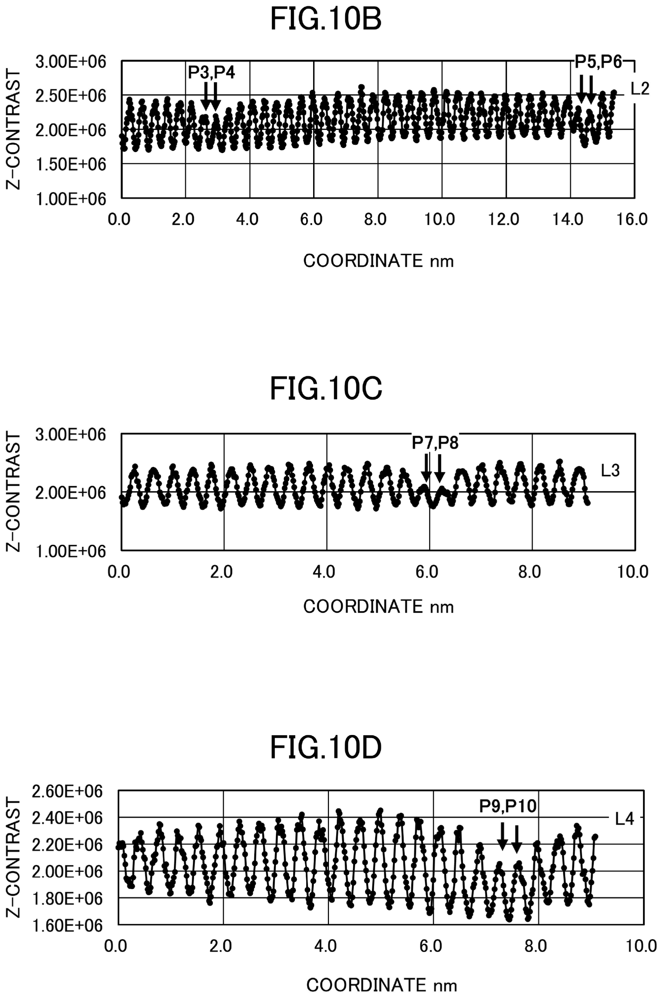

At the line L2 depicted in Fig. 10B, the maximum values of the Z-contrast at the points P3 to P6 were reduced to 89.3%, 92.8%, 93.2%, an 91.35%, respectively, with respect to the average value.

At the line L3 depicted in Fig. 10C, the maximum values of the Z-contrast at the points P7 and P8 were reduced to 86.95% and 85.6%, respectively, with respect to the average value.

At the line L4 depicted in Fig. 10D, the maximum values of the Z-contrast at the points P9 and P10 were reduced to 89.2% and 89.4%, respectively, with respect to the average value.

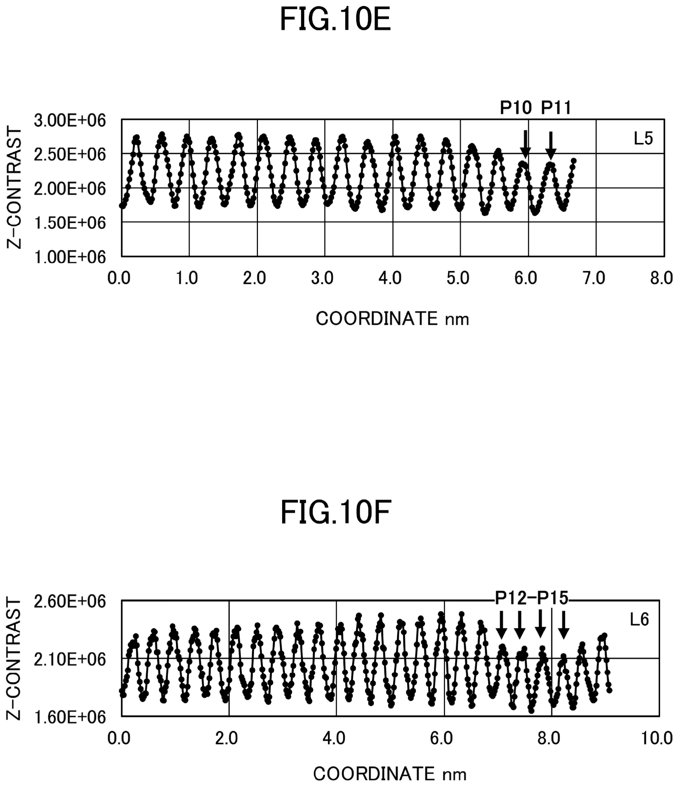

At the line L5 depicted in Fig. 10E, the maximum value of the Z-contrast at the point P11 was reduced to 88.6% with respect to the average value.

At the line L6 depicted in Fig. 10F, the maximum values of the Z-contrast at the points P12 to P15 were reduced to 94.0%, 93.2%, 93.4%, and 90.6%, respectively, with respect to the average value.

Fig. 14A is an STEM-HAADF image of the complex tungsten oxide particle according to Example 1 at [110] incidence, specifically, a prism plane image of the complex tungsten oxide particles. The STEM-HAADF image at [110] incidence was also observed in the same conditions as the case of [001] incidence, except that the incident direction was different.

According to Fig. 14A, planar defects 141 were formed in the direction perpendicular to the c-axis due to the W atom defects. The defect is a defect of the basal plane (001). Fig. 14B is an enlarged view of the planar defect of Fig. 14A. It was confirmed that the space 142 having a length of approximately 3 nm in the c-axis direction where Cs atoms and W atoms were vacant was present in the vicinity of the defect. It is assumed that the planar defect 141 that was a defect of the basal plane, and the space 142 where Cs and W were not present in the c-axis direction were generated because the above defect or vacancies remained as the interface of the crystallized regions when the Cs and W atoms were rearranged within the crystal in the heat treatment step.

In addition, it was confirmed that the crystal structure was distorted, and the atomic arrangements in the both sides of the planar defect 141 were shifted by a 1/4 cycle due to the W atom defect in the length of approximately 30 nm in the direction perpendicular to the c-axis. Fig. 15 is a diagram schematically illustrating the arrangement of the W atoms and the Cs atoms of Figs. 14A and 14B.

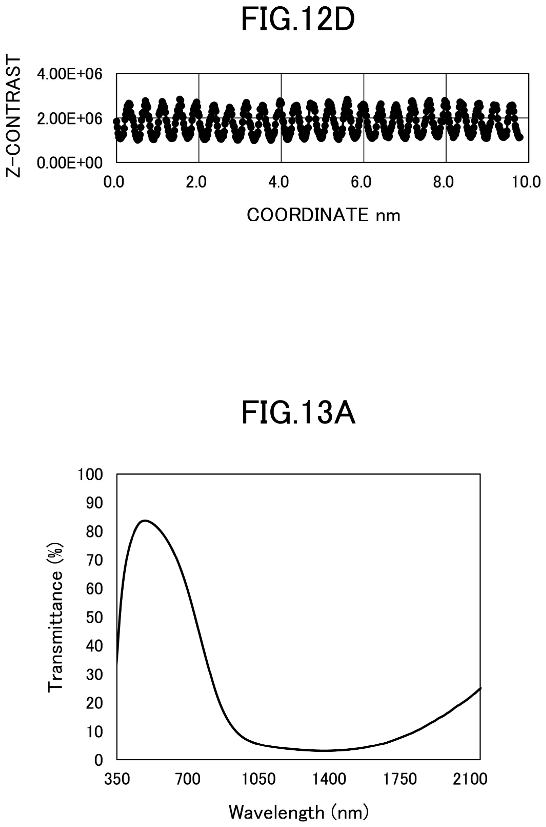

As the optical characteristics of the near-infrared ray absorbing particle dispersion liquid according to Example 1, a transmitted light profile was measured under the above-described conditions. The result of the transmitted light profile is exhibited in Fig. 13A, and the transmittance at a respective wavelength is presented in Table 1.

A molar extinction coefficient curve was determined from an absorption curve obtained in the measurement of the transmitted light profile of the near-infrared ray absorbing particle dispersion liquid according to Example 1. The molar extinction coefficient curve was separated into absorption curves of three absorption components, which were an absorption curve of localized surface plasmon resonance (LSPR⊥) in the direction perpendicular to the c-axis, an absorption curve of localized surface plasmon resonance (LSPR//) in the direction parallel to the c-axis, and an absorption curve of polaron absorption. The results are exhibited in Fig. 17A. In Fig. 17A, "exp." indicates a measured value, and "calc" indicates the sum of the absorbance curves of the three absorption components.

The peak position, peak intensity, and integrated intensity of each of the absorption curves of the three absorption components are presented in Table 2. In addition, the ratio of the integrated intensity of each of the absorption curves of the three absorption component to the integrated intensity of the molar extinction coefficient curve is presented in Table 3.

Further, the near-infrared ray absorbing particle dispersion liquid according to Example 1 was diluted so that the visible light transmittance was 80%, and the values of the L*, a*, b* color system, which represented chromaticity, were calculated from the measurement data of the spectrophotometer. The results are presented in Table 4.

(2) Production of near-infrared ray absorbing particle dispersion product

The near-infrared ray absorbing particle dispersion liquid according to Example 1 and a UV curable resin (UV-3701, manufactured by TOAGOSEI CO., LTD.) were mixed, thereby producing a coating liquid according to Example 1. The coating liquid according to Example 1 was applied onto 3 mm-thick plate glass by a bar coater, and the applied coating liquid was cured by UV irradiation, thereby obtaining a near-infrared ray absorbing particle dispersion product according to Example 1.

An environmental resistance test was performed on the obtained near-infrared ray absorbing particle dispersion product according to Example 1. The environmental resistance test included a change in transmittance after irradiating the dispersion product with UV rays (UV resistance test), a change in transmittance after leaving the dispersion product in a constant-temperature chamber of 120°C for 19 days (heat resistance test), and a change in transmittance after leaving the dispersion product in a constant-temperature constant-humidity chamber at a relative humidity of 90%RH and a temperature of 85°C for 13 days (moisture and heat resistance test).

UV rays of the UV resistance test were radiated under conditions in which a wavelength of a mercury lamp was 365 nm, illuminance was 134.8 mW/cm$^2$, and a total dose of 24.5 J/cm$^2$..

Optical profiles of the dispersion product according to Example 1 before and after the UV resistance test are exhibited in Fig. 19A, and the relationship between the UV irradiation dose and the visible light transmittance (VLT) is exhibited in Fig. 20.

Optical profiles of the dispersion product according to Example 1 before and after the heat resistance test are exhibited in Fig. 21A, and the relationship between the number of days left in the environment of 120°C and the visible light transmittance (VLT) is exhibited in Fig. 22.

Optical profiles of the dispersion product according to Example 1 before and after the moisture and heat resistance test are exhibited in Fig. 23A, and the relationship between the number of days left in the atmosphere at the relative humidity of 90%RH and the temperature of 85°C and the visible light transmittance (VLT) is exhibited in Fig. 24.

[Comparative Example 1]

(1) Production of complex tungsten oxide particles and near-infrared ray absorbing particle dispersion liquid

In 0.330 kg of water, 0.216 kg of $Cs_2CO_3$ was dissolved. To the resultant solution, 1.000 kg of $H_2WO_4$ was added, and the resultant mixture was sufficiently stirred, followed by drying to obtain a dried product. The dried product was placed and heated in an electric furnace, while supplying 5% of $H_2$ gas in a $N_2$ gas serving as a carrier based on the volume percentage, thereby baking the dried product for 1 hour at a temperature of 800°C. Then, the feeding gas was switched to only a $N_2$ gas, and the temperature was lowered to room temperature, thereby obtain a coarse powder of complex tungsten oxide according to Comparative Example 1.

Twenty-three percent by mass of the obtained coarse powder of the complex tungsten oxide, 8 percent by mass of the dispersant a, and 69 percent by mass of butyl acetate were weighed. The weighed materials were placed in a paint shaker together with zirconia beads having a diameter of 0.3 mm, and dispersion processing was performed using the paint shaker for 15 hours, thereby obtaining a near-infrared ray absorbing particle dispersion liquid according to Comparative Example 1. The average particle diameter (length measured by a transmission electron microscope) of the complex tungsten oxide particles in the obtained dispersion liquid according to Comparative Example 1 was measured, and the measured average particle diameter was 25.1 nm. The average particle diameter was measured and calculated in the same procedure and under the same conditions as in Example 1. In addition, a fraction of the dispersion liquid according to Comparative Example 1 was collected, and the solvent was removed, thereby obtaining $Cs_{0.33}WO_3$ particles as complex tungsten oxide particles according to Comparative Example 1.

STEM-HAADF images of the $Cs_{0.33}WO_3$ particle, which is the complex tungsten oxide particle according to Comparative Example 1, are exhibited in Figs. 11A and 11B. Fig. 11A illustrates an STEM-HAADF image of a whole particle. Moreover, Fig. 11B illustrates a magnified view of a square region 111 of the particle illustrated in Fig. 11A. The powder synthesized via solid-phase synthesis has fractured planes due to dispersion processing performed for a long period. Since the thickness of the particle affects the contrast, the region 111 in the center portion of the particle, which was considered to receive less influence of the particle thickness was enlarged and extracted.

In Fig. 11B, low contrast spots of the Cs columns were confirmed at the spots indicated by the arrow 112 and the arrow 113. The above defects of the Cs columns were considered to be caused by the desorption of Cs due to the pulverization process performed for a long period.

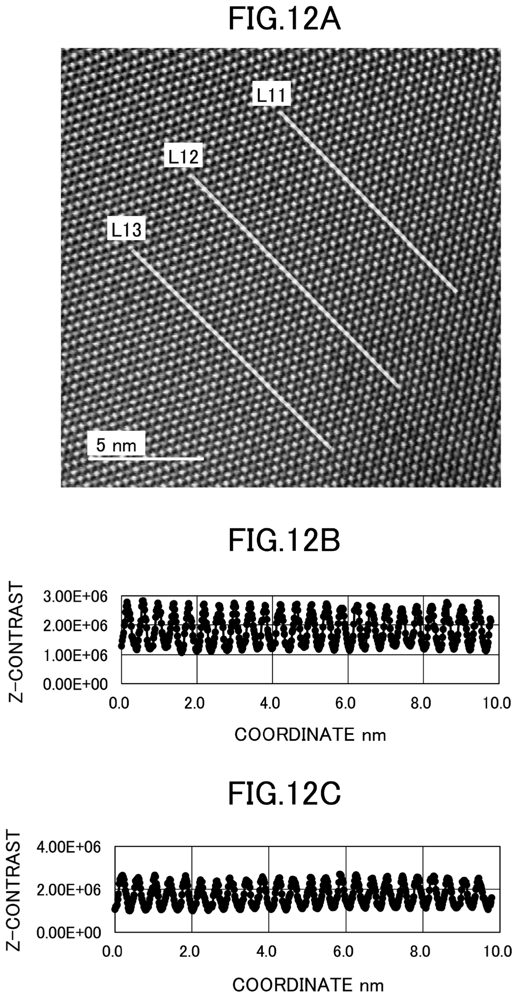

Figs. 12B to 12D illustrate the results of the extracted line profiles at the lines L11 to L13, which are W/W arrays, in the STEM-HAADF image illustrated in Fig. 12A. A point where the value of the Z-contrast of W atoms was 95% or less of the average contrast value was not confirmed at any spot. Specifically, it was confirmed that a W defect was not generated.

As optical characteristics of the near-infrared ray absorbing particle dispersion liquid according to Comparative Example 1, a transmitted light profile was measured under the above-described conditions. The result of the transmitted light profile is exhibited in Fig. 13B, and the transmittance at a respective wavelength is presented in Table 1.

A molar extinction coefficient curve was determined from an absorption curve obtained in the measurement of the transmitted light profile of the near-infrared ray absorbing particle dispersion liquid according to Comparative Example 1. The molar extinction coefficient curve was separated into absorption curves of three absorption components, which were an absorption curve of localized surface plasmon resonance (LSPR⊥) in the direction perpendicular to the c-axis, an absorption curve of localized surface plasmon resonance (LSPR//) in the direction parallel to the c-axis, and an absorption curve of polaron absorption. The results are exhibited in Fig. 17B.

The peak position, peak intensity, and integrated intensity of each of the absorption curves of the three absorption components, and the integrated intensity of the curves are presented in Table 2. In addition, the ratio of the integrated intensity of each of the absorption curves of the three absorption component to the integrated intensity of the molar extinction coefficient curve is presented in Table 3.

Further, the near-infrared ray absorbing particle dispersion liquid according to Comparative Example 1 was diluted so that the visible light transmittance was 80%, and the values of the L*, a*, b* color system, which represented chromaticity, were calculated from the measurement data of the spectrophotometer. The results are presented in Table 4.

(2) Production of near-infrared ray absorbing particle dispersion product

A near-infrared ray absorbing particle dispersion product was produced and evaluated in the same procedure under the same conditions as in Example 1, except that the near-infrared ray absorbing particle dispersion liquid according to Comparative Example 1 was used.

Optical profiles of the dispersion product according to Comparative Example 1 before and after the UV resistance test are exhibited in Fig. 19B, and the relationship between the UV irradiation dose and the visible light transmittance (VLT) is exhibited in Fig. 20.

Optical profiles of the dispersion product according to Comparative Example 1 before and after the heat resistance test are exhibited in Fig. 21B, and the relationship between the number of days left in the environment of 120°C and the visible light transmittance (VLT) is exhibited in Fig. 22.

Optical profiles of the dispersion product according to Comparative Example 1 before and after the moisture and heat resistance test are exhibited in Fig. 23B, and the relationship between the number of days left in the atmosphere at the relative humidity of 90%RH and the temperature of 85°C and the visible light transmittance (VLT) is exhibited in Fig. 24.

[Table 1]

| | Transmittance of respective wavelengths (%) | | | | | |
|---|---|---|---|---|---|---|
| | 600 nm | 700 nm | 800 nm | 900 nm | 1000 nm | 1100 nm |
| Example 1 | 76.72 | 74.54 | 33.31 | 13.82 | 6.76 | 4.69 |
| Comparative Example 1 | 76.47 | 51.12 | 21.59 | 13.49 | 13.85 | 11.89 |

[Table 2]

| | | Peak position (eV) | Peak position (nm) | Peak value (height) | Integrated intensity of absorption |
|---|---|---|---|---|---|
| Example 1 | Absorption curve of localized surface plasmon resonance (LSPR⊥) in direction perpendicular to c-axis | 0.86 | 1435 | 2526.58 | 96015.38 |
| | Absorption curve of localized surface plasmon resonance (LSPR //) in direction parallel to c-axis | 1.20 | 1030 | 922.35 | 33042.00 |
| | Absorption curve of polaron absorption | 1.26 | 985 | 438.19 | 12265.60 |
| Comparative Example 1 | Absorption curve of localized surface plasmon resonance (LSPR⊥) in direction perpendicular to c-axis | 0.80 | 1550 | 2050.66 | 78843.30 |
| | Absorption curve of localized surface plasmon resonance (LSPR //) in direction parallel to c-axis | 1.00 | 1240 | 437.63 | 20209.67 |
| | Absorption curve of polaron absorption | 1.40 | 885 | 1058.23 | 31174.01 |

[Table 3]

| | A ratio to integrated intensity of molar extinction coefficient (%) | | |
|---|---|---|---|
| | Absorption curve of localized surface plasmon resonance (LSPR⊥) in direction perpendicular to c-axis | Absorption curve of localized surface plasmon resonance (LSPR //) in direction parallel to c-axis | Absorption curve of polaron absorption |
| Example 1 | 67.9 | 23.4 | 8.7 |
| Comparative Example 1 | 60.6 | 15.5 | 23.9 |

[Table 4]

| | L* | a* | b* |
|---|---|---|---|
| Example 1 | 91.77102 | -4.5619 | -0.61502 |
| Comparative Example 1 | 91.76563 | -4.47674 | -0.71411 |

It was confirmed that the bottom of the transmittance of the near-infrared ray absorbing particle dispersion liquid of Example 1 illustrated in Fig. 13A in the near-infrared ray region could be 5% or less even when the peak of the transmittance in the wavelength range of 500 nm to 600 nm was 75% or greater.

Conversely, it was confirmed that the minimum transmittance in the near-infrared ray region of the near-infrared ray absorbing particle dispersion liquid of Comparative Example 1 illustrated in Fig. 13B did not reach 5% or less when the peak of the transmittance in the wavelength range of 500 nm to 600 nm was 75% or greater, indicating poor near-infrared ray shielding performance.

In addition, Table 1 indicates that the transmittance of the near-infrared ray absorbing particle dispersion liquid of Example 1 at the wavelength of 700 nm was higher than the transmittance of the near-infrared ray absorbing particle dispersion liquid of Comparative Example 1 including the complex tungsten oxide particles of the related art, and the near-infrared ray absorbing particle dispersion liquid of Example 1 transmitted light at the long wavelength side of the visible light region (wavelength of 380 nm or longer and 780 nm or shorter). The above results demonstrate that the complex tungsten oxide of Example 1 passes through red light in the vicinity of the wavelength of 800 nm, and therefore also contribute to an improvement of a color tone of the complex tungsten oxide particles of the related art.

According to Table 4, b* of the near-infrared ray absorbing particle dispersion liquid according to Example 1 was -0.61502, whereas b* of the near-infrared ray absorbing particle dispersion liquid according to Comparative Example 1 was -0.71411. The larger value of b* in negative indicates that the dispersion liquid is tinted in blue. It was demonstrated that Example 1 had a lower level of blue compared to the complex tungsten oxide particles that had been known in the related art, and contributed to an improvement in a color tone.

It was confirmed from the results of the UV resistance tests exhibited in Figs. 19A, 19B, and 20 that the dispersion product according to Example 1 had low visible light transmittance relative to the UV irradiation dose compared to the dispersion product according to Comparative Example 1.

This is considered to be because the complex tungsten oxide particles according to Example 1 had a hexagonal crystal structure due to rearrangement of the W atoms, and included a small number of defects of Cs atoms that were the M element atoms. The above-described UV resistance is also an effect owing to the rearrangement of the W atoms by which the complex tungsten oxide particles of the present embodiment form a hexagonal crystal structure.

It could be confirmed from the results of the heat resistance tests exhibited in Figs. 21A and 21B that the change in the optical profile of the dispersion product according to Example 1 before and after the test was small compared to the dispersion product of Comparative Example 1. Moreover, it was confirmed from the result of the heat resistance test exhibited in Fig. 22 that the change in the visible light transmittance of the dispersion product according to Example 1 was also small compared to the dispersion product of Comparative Example 1. The increase in the transmittance of the complex tungsten oxide particles in the environment at the temperature of 120°C was assumed to be caused by oxidation occurred in the oxygen vacancy of the complex tungsten oxide particles. It is considered that, as described through the embodiment, the complex tungsten oxide particles of the present embodiment include a smaller number of $W^{5+}$ and a smaller number of oxygen vacancies, and therefore there is not much room for further oxidation to progress.

It could be confirmed from the moisture and heat resistance tests exhibited in Figs. 23A and 23B that the change in the optical profile of the dispersion product according to Example 1 before and after the test was small compared to the dispersion product of Comparative Example 1. It could be confirmed from the result of the moisture and heat resistance test exhibited in Fig. 24 that the change in the visible light transmittance of the dispersion product according to Example 1 was small compared to the dispersion product of Comparative Example 1. It is considered that, in the environment at the relative humidity of 90% and the temperature of 85°C, water from the atmosphere enters the dispersion product and causes oxidation, while dissolving $Cs^+$ of the cesium tungsten oxide particles. However, the change in the transmittance of the complex tungsten oxide particles is considered to be small because the oxidation reaction is not easily progressed in the complex tungsten oxide particles according to Example 1, while water entering the dispersion product dissolves $Cs^+$.

This application claims priority under Japanese Patent Application No. 2023-043590 filed March 17, 2023, and Japanese Patent Application No. 2023-170832 filed September 29, 2023, the entire contents of Japanese Patent Application No. 2023-043590 and Japanese Patent Application No. 2023-170832 are incorporated herein by reference.

REFERENCE SIGNS LIST

| | |
|---|---|
| 10 | complex material production apparatus |
| 11 | reservoir |
| 12 | two-fluid nozzle |
| 13 | reaction tube |
| 131 | piping |
| 14 | filter |
| 15 | ejector |
| 20 | reduction processing device |
| 21 | reaction tube |
| 21A | one port |
| 21B | the other port |
| 22 | heater |
| 23 | container |
| 24 | complex tungsten oxide particles |
| 30 | near-infrared ray absorbing particle dispersion liquid |
| 31 | near-infrared ray absorbing particles |
| 32 | liquid medium |
| 40 | near-infrared ray absorbing particle dispersion product |
| 41 | near-infrared ray absorbing particles |
| 42 | solid medium |
| 50 | near-infrared ray absorbing laminate |
| 51 | near-infrared ray absorbing particle dispersion product |
| 521 and 522 | transparent substrate |

| 60 | near-infrared ray absorbing transparent substrate |
| 61 | transparent substrate |
| 61A | one surface |
| 62 | near-infrared ray absorbing layer |
| 701 | W/W array |
| 702 | W/Cs array |
| 71 | W atom |
| 72 | O atom |
| 73 | M element |
| 74 | octahedron |
| 75 | void |
| 91 | region |
| L1 to L6 | line |
| P1 to P15 | point |
| 111 | region |
| 112 and 113 | arrow |
| L11 to L13 | line |
| 141 | planar defect |
| 142 | space |

**Claims**

1. Complex tungsten oxide particles comprising:
   complex tungsten oxide,

   the complex tungsten oxide being represented by a general formula: $M_xW_yO_z$ (where, the M element is at least one element selected from the group consisting of alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; $0.20 \leq x/y \leq 0.37$; and $2.2 \leq z/y \leq 3.3$), and
   a crystal system of the complex tungsten oxide being hexagonal,

   wherein an STEM-HAADF image of the complex tungsten oxide particles at [001] incidence includes a spot in a number ratio of 0.01% or greater and 10% or less, where the spot is a spot at which a value of a Z-contrast of tungsten atoms is reduced to be 95% or lower of an average value of the Z-contrast of tungsten atoms.

2. The complex tungsten oxide particles according to claim 1, wherein the M element includes at least one element selected from the group consisting of Rb and Cs.

3. The complex tungsten oxide particles according to claim 1 or 2,
   wherein an average particle diameter of the complex tungsten oxide particles is 10 nm or greater and 200 nm or less.

4. The complex tungsten oxide particles according to claim 1 or 2,
   wherein the STEM-HAADF image of the complex tungsten oxide particles at [110] incidence includes a planar defect in a direction perpendicular to a c-axis.

5. A near-infrared ray absorbing particle dispersion liquid, comprising:

   near-infrared ray absorbing particles; and
   a liquid medium,

   wherein the near-infrared ray absorbing particles are the complex tungsten oxide particles according to claim 1 or 2.

6. A near-infrared ray absorbing particle dispersion product, comprising:

   near-infrared ray absorbing particles; and
   a solid medium,

wherein the near-infrared ray absorbing particles are the complex tungsten oxide particles according to claim 1 or 2.

# FIG.1

# FIG.2

# FIG.3

30

31

32

# FIG.4

40

41

42

# FIG.5

50

522

51

521

# FIG.6

60

61A

62

61

# FIG.7

FIG.8

# FIG.9A

# FIG.9B

# FIG.10A

## FIG.10B

## FIG.10C

## FIG.10D

# FIG.10E

# FIG.10F

# FIG.11A

# FIG.11B

# FIG.12A

# FIG.12B

# FIG.12C

# FIG.12D

# FIG.13A

# FIG.13B

# FIG.14A

# FIG.14B

EP 4 682 107 A1

FIG.15

W defective basal shear plane

c-axis

Cs plane    W plane

Planer Cs, W defects

Cs    W

# FIG.16A

# FIG.16B

# FIG.17A

# FIG.17B

# FIG.18

# FIG.19A

## FIG.19B

## FIG.20

# FIG.21A

# FIG.21B

# FIG.22

# FIG.23A

# FIG.23B

# FIG.24

## INTERNATIONAL SEARCH REPORT

| International application No. |
|---|
| **PCT/JP2024/009664** |

| A. | CLASSIFICATION OF SUBJECT MATTER |
|---|---|

***C01G 41/00***(2006.01)i; ***C08K 3/01***(2018.01)i; ***C08L 101/00***(2006.01)i; ***C09K 3/00***(2006.01)i
FI:  C01G41/00 A; C08K3/01; C08L101/00; C09K3/00 105

According to International Patent Classification (IPC) or to both national classification and IPC

| B. | FIELDS SEARCHED |
|---|---|

Minimum documentation searched (classification system followed by classification symbols)

C01G41/00; C08K3/01; C08L101/00; C09K3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-28279 A (SUMITOMO METAL MINING CO., LTD.) 25 February 2021 (2021-02-25)<br>paragraphs [0139]-[0190], example 1, table 1, fig. 1, 7-8, 10 | 1-6 |
| A | JP 2022-135131 A (SUMITOMO METAL MINING CO., LTD.) 15 September 2022 (2022-09-15)<br>entire text | 1-6 |
| A | JP 2022-038474 A (SUMITOMO METAL MINING CO., LTD.) 10 March 2022 (2022-03-10)<br>entire text | 1-6 |
| A | JP 2020-026384 A (SUMITOMO METAL MINING CO., LTD.) 20 February 2020 (2020-02-20)<br>entire text | 1-6 |
| A | US 2010/0102700 A1 (JAISWAL, A. et al.) 29 April 2010 (2010-04-29)<br>entire text | 1-6 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/009664**

**C.** **DOCUMENTS CONSIDERED TO BE RELEVANT**

| Category* | Citation of document, with indication, where appropriate, of the relevant passages | Relevant to claim No. |
|---|---|---|
| A | NAKAKURA, Shuhei. Synthesis of Cesium Tungsten Bronze Nanoparticles by Spray Pyrolysis and Their Optical Properties. Doctoral Degree Thesis, Hiroshima University. March 2020, pp. 1-98<br>entire text | 1-6 |
| P, A | JP 2023-078980 A (SUMITOMO METAL MINING CO., LTD.) 07 June 2023 (2023-06-07)<br>entire text | 1-6 |

Form PCT/ISA/210 (second sheet) (July 2022)

## INTERNATIONAL SEARCH REPORT
### Information on patent family members

International application No.

**PCT/JP2024/009664**

| Patent document cited in search report | | | Publication date (day/month/year) | Patent family member(s) | | | Publication date (day/month/year) |
|---|---|---|---|---|---|---|---|
| JP | 2021-28279 | A | 25 February 2021 | (Family: none) | | | |
| JP | 2022-135131 | A | 15 September 2022 | (Family: none) | | | |
| JP | 2022-038474 | A | 10 March 2022 | US<br>entire text<br>WO<br>entire text<br>EP<br>TW<br>CN<br>KR | 2023/0348292<br><br>2022/045028<br><br>4206139<br>202219296<br>115943124<br>10-2023-0057359 | A1<br><br>A1<br><br>A1<br>A<br>A<br>A | |
| JP | 2020-026384 | A | 20 February 2020 | (Family: none) | | | |
| US | 2010/0102700 | A1 | 29 April 2010 | (Family: none) | | | |
| JP | 2023-078980 | A | 07 June 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005037932 A
- JP 2012532822 A
- WO 2017129516 A
- US 20100102700
- JP 2023043590 A
- JP 2023170832 A

**Non-patent literature cited in the description**

- **TAKEDA HIROMITSU** ; **KENJI ADACHI**. Near infrared absorption of tungsten oxide nanoparticle dispersions.. *Journal of the American Ceramic Society*, 2007, vol. 90 (12), 4059-4061
- **GUO CHONGSHEN et al.** Novel synthesis of homogenous CsxWO3 nanorods with excellent NIR shielding properties by a water controlled-release solvothermal process.. *Journal of Materials Chemistry*, 2010, vol. 20 (38), 8227-8229
- **MAMAK MARC et al.** Thermal plasma synthesis of tungsten bronze nanoparticles for near infra-red absorption applications.. *Journal of Materials Chemistry*, 2010, vol. 20 (44), 9855-9857
- **HIRANO, TOMOYUKI et al.** Synthesis of highly crystalline hexagonal cesium tungsten bronze nanoparticles by flame-assisted spray pyrolysis.. *Advanced Powder Technology*, 2018, vol. 29 (10), 2512-2520
- **NAKAKURA, SHUHEI et al.** Improved photochromic stability in less deficient cesium tungsten bronze nanoparticles.. *Advanced Powder Technology*, 2020, vol. 31 (2), 702-707